(19) **Europäisches Patentamt / European Patent Office / Office européen des brevets**

(11) **EP 1 214 260 B1**

(12) # EUROPEAN PATENT SPECIFICATION

(45) Date of publication and mention
of the grant of the patent:
**13.12.2017 Bulletin 2017/50**

(51) Int Cl.:
**B65F 5/00** (2006.01)　　**E04F 17/10** (2006.01)
**B65G 53/06** (2006.01)

(21) Application number: **00948434.6**

(22) Date of filing: **22.06.2000**

(86) International application number:
**PCT/SE2000/001332**

(87) International publication number:
**WO 2001/005684 (25.01.2001 Gazette 2001/04)**

(54) **ADAPTIVE PREDICTION-BASED CONTROL OF A VACUUM REFUSE COLLECTION SYSTEM**

ADAPTIVE UND PRÄDIKTIVE REGELUNG EINES SYSTEMS ZUM SAMMELN VON MÜLL MITTELS VAKUUM

COMMANDE A PREDICTION ADAPTIVE D'UN SYSTEME DE COLLECTE D'ORDURES A VIDE

(84) Designated Contracting States:
**AT BE CH CY DE DK ES FI FR GB GR IE IT LI LU MC NL PT SE**

(30) Priority: **16.07.1999 SE 9902719**
**29.12.1999 SE 9904830**

(43) Date of publication of application:
**19.06.2002 Bulletin 2002/25**

(73) Proprietor: **Envac AB**
**112 26 Stockholm (SE)**

(72) Inventors:
 • **CEDERBORG, Per**
 **S-181 47 Lidingö (SE)**

 • **HYDEN, Hans**
 **S-162 46 Vällingby (SE)**
 • **JANKEVICS, Verner**
 **S-165 71 Hässelby (SE)**
 • **NORLENIUS, Kent**
 **S-112 39 Stockholm (SE)**

(74) Representative: **Hedman, Anders et al**
**Aros Patent AB**
**P.O. Box 1544**
**751 45 Uppsala (SE)**

(56) References cited:
**WO-A1-96/22238　　WO-A1-98/47788**

 • **PATENT ABSTRACTS OF JAPAN & JP 08 282 803 A (SHIMIZU CORP) 29 October 1996**

**EP 1 214 260 B1**

**Description**

**TECHNICAL FIELD OF THE INVENTION**

The present invention generally relates to a method of operating a vacuum refuse collection system, a vacuum refuse collection system, a control system for controlling emptying of refuse in such a system as well as the use of a computer program element-for controlling operation of a vacuum refuse collection system according to the preambles of claims 1, 12, 22 and 27 respectively.

**BACKGROUND**

Refuse collection systems operating at subatmospheric or vacuum pressure for transport of refuse by means of suction of air have been in use for many years and are well known to present an efficient, clean and convenient solution to the waste disposal problem. Such systems for suction transport of refuse, hereinafter simply referred to as vacuum refuse collection systems, have worked remarkably well in smaller and medium-sized residential and office building areas. However, as vacuum refuse collection systems have been placed into service in larger and more dense residential and office building areas and/or areas with multi-story buildings of the high-rise type, the demands on the systems have increased considerably.
In particular, when refuse chutes are located in high-rise buildings, the amounts of refuse inserted into the chutes in a short period of time may be very large, and the amounts of refuse gathering in the refuse chutes may then become too high between the periodic emptyings of the refuse chutes.
A common approach to reduce the problems associated with a high inflow of refuse into the refuse chutes is to increase the temporary storage capacity of at least specific, frequently used refuse chutes. For example, our international application WO 98/47788 discloses a refuse limitation valve provided above the discharge valve in the refuse chute to enable storage of refuse within the refuse chute above the limitation valve.
This arrangement has turned out to be very efficient in many applications. However, since the refuse chute itself is used as a storage volume for refuse there is a risk, especially in high-rise buildings, that the chute above the limitation valve is filled with refuse up to the first access port before the next emptying.
Different attempts have also been made to provide so-called expanded storage volumes in at least some of the refuse chutes, for example as described in SE-A-9900401. The expanded storage volume, normally in the form of a container with substantially larger cross-section than the refuse chute, is provided at a position above the discharge valve, and allows temporary storage of relatively high amounts of refuse.
Another common approach involves emptying the refuse chutes and collecting the refuse therefrom more frequently, thus shortening the emptying cycle. However, the operation control of refuse collection systems of today is far from optimized in this respect.
Attempts have been made to reduce the emptying and collection times by increasing the vacuum in the transport pipes of the system, but unfortunately such an increase of the vacuum will increase the danger of compacting the refuse too much, resulting in a plug flow that may cause blockage in the pipes of the system. Such blockage may even shut down an entire branch line or transport line. Another problem related to the employment of increased vacuum levels is the noise that is generated by the resulting airflow through the refuse chute in connection with the emptying. In addition, high levels of vacuum may force opened access ports to close rapidly and jam or even injure a person that is about to discharge a bag of refuse.
More recently, so-called level-controlled emptying have been introduced in order to optimize the performance of vacuum refuse collection systems. In level-controlled vacuum refuse collection systems, each refuse chute is provided with a discrete level sensor for indicating the existence of refuse being piled up to a predetermined level in the refuse chute. When the refuse reaches the predetermined level, the level sensor sends a level-indication signal to the control system. At level-controlled emptying, the control system gives higher priority to refuse chutes with level indications, and empties such refuse chutes on a "first-come first-serve" basis. In this way, the control system may change the predefined structured emptying order normally used by the system and direct the collection of refuse to refuse chutes with level indications.
Conventional level-controlled emptying has turned out to be effective at certain load conditions in smaller systems, leading to improved system performance. In larger and more complex systems however, level-controlled emptying tends to have an opposite effect, leading to frequent jumps between different branches of the system and thus inefficient use of the available refuse collection resources.
Conventional level-controlled emptying is also inflexible in that once the level sensors have been arranged in the refuse chutes, it is difficult to flexibly adapt the predefined levels so as to change the time margins of the vacuum refuse collection system and optimize the operation of the system. The predefined level used in conventional level-controlled emptying may be too high to prevent overloading of refuse chutes at high load in the system, whereas at low load in the system, the predefined level may be too low for optimal utilization of the resources.

Another disadvantage is that the "first-come first-serve" principle does not consider the consequences of the order in which the refuse chutes are emptied. For example, there is always the risk of overloading of a refuse chute in a critical area which is not first in the emptying queue.

## RELATED ART

The international application WO-A-96/22238 discloses a plant for differentiated collection of refuse. The plant has a plurality of collection units, and each collection unit includes a plurality of containers, an arrangement for feeding different refuse to different containers and means for detecting data relevant to the amount of refuse within each container. The data detecting means may be in the form of a sensor for detecting the level of refuse in the container.

## SUMMARY OF THE INVENTION

It is a general object of the present invention to provide an efficient and reliable vacuum refuse collection system according to claim 12 as well as an improved and flexible method of operating such a system according to claim 1. In particular, it is desirable to optimize the vacuum refuse collection system with respect to reliability, overall efficiency, power consumption and other operational costs. In this respect, it is an object to reduce the total number of discharge valve openings per day, reducing the overall transport time and optimizing the available transport and storage capacity, and at the same time minimize possible operational disturbances.

It is another object of the invention to provide an improved control system for controlling emptying of refuse from refuse chutes in a vacuum refuse collection system according to claim 22. Yet another object of the invention is to provide the use of a computer program for controlling operation of a vacuum refuse collection system according to claim 27, when said computer program is running on a computer operatively connected to the system.

The general idea according to the invention is to perform, by a level indicator system, consecutive measurements of the level of refuse in at least one refuse chute, and adaptively predict, by a control system, a future value of at least one operational parameter of the vacuum refuse collection system based on a number of the measurements. The predicted value of the operational parameter(s) is subsequently used for effectuating controlled emptying of the vacuum refuse collection system. Naturally, as new measurements are performed, new predictions are made in order to adaptively update the predicted value of the operational parameter(s). The basic procedure according to the invention is to predict operational parameters representing a future point in time when the level of refuse in a refuse chute is expected to exceed a given threshold level or a probable level of refuse in the refuse chute at a given future point in time. For example, it is desirable to predict the optimal time for emptying of a refuse chute so that the refuse chute is emptied at the "exact" right moment, not too early when the refuse chute is far from full and not too late when the risk for overloading the chute is high. By adaptively predicting future values of these operational parameters based on empirical data, instead of using simple and static rules of thumb, the reliability and efficiency of the overall vacuum refuse collection system can be substantially improved. The empirical data used for making the predictions is based on frequent measurements of the increasing level of refuse in the refuse chute. Normally, the sampling period is smaller than 1 min, and preferably smaller than 15 seconds (e.g. 10 seconds or even 1 second). The empirical data is advantageously processed by a computer or other equivalent processing means to estimate the predicted value of the operational parameter(s).

Compared to the conventional level-controlled emptying where discrete level sensors are arranged at a predetermined position in the refuse chutes and simply indicates the existence of refuse being piled up over the predetermined position in the chute, the solution according to the invention opens up for a more secure and flexible control of the refuse collection system.

According to a preferred embodiment of the invention, the prediction includes a gradient-based procedure for adaptively determining a rate of growth of refuse in a refuse chute, and based on the determined growth rate and a measurement of the actual level of refuse in the refuse chute an extrapolation is made to estimate the predicted value. It should though be understood that any of a number of suitable techniques such as non-linear curve fitting, adaptive filtering or equivalent can be used.

The above solution of prediction-based control has turned out to be particularly efficient for larger and more complex systems where refuse chutes are partitioned into groups and emptied on group basis instead of on the level of individual refuse chutes. In this way, the utilization of the available resources of the vacuum refuse collection system is improved even further.

In group operation, the groups are normally selected for emptying one at a time, and the selection procedure is based on predicted values of operational parameters of the refuse collection system. Preferably, the group selection procedure makes use of so-called emptying conditions, and it is determined, for each group, whether the emptying condition for the group is valid or not based on an appropriate subset of the predicted values. Groups with valid emptying conditions are then selectable for emptying of refuse. For optimal performance, each group is generally associated with a priority value, and the group with the highest priority value among the groups with valid emptying conditions is selected for emptying of refuse. There are different ways of setting the priority values, for example by considering the predicted values and the consequences of overloading refuse chutes.

Preferably, the prediction-based control of vacuum refuse collection systems is implemented in software as a computer program product or equivalent, which when loaded into a computer, operatively connected to a refuse collection system, is active in controlling the operation of the system.

Other advantages offered by the present invention will be appreciated upon reading of the below description of the embodiments of the invention.

## BRIEF DESCRIPTION OF THE DRAWINGS

The invention, together with further objects and advantages thereof, will be best understood by reference to the following description taken together with the accompanying drawings, in which:

Fig. 1 is a schematic drawing of an illustrative example of a vacuum refuse collection system;

Fig. 2 is a schematic drawing of an illustrative refuse chute equipped with a level sensor;

Fig. 3 is a schematic graph that illustrates an example of how the level of refuse in a refuse chute may vary with time, and indicates a prediction of a future point in time when the level of refuse is expected to exceed a given threshold level;

Fig. 4 is a schematic flow diagram of a prediction-based method of operating a vacuum refuse collection system according to a first preferred embodiment of the invention;

Fig. 5 is a schematic diagram of a computer-implemented control system according to a preferred embodiment of the invention; and

Fig. 6 illustrates a schematic logical view of an illustrative vacuum refuse collection system according to the invention; and

Fig. 7 is a schematic flow diagram of a prediction-based method of operating a vacuum refuse collection system according to a second preferred embodiment of the invention.

## DETAILED DESCRIPTION OF EMBODIMENTS OF THE INVENTION

Throughout the drawings, the same reference characters will be used for corresponding or similar elements.

In order to avoid misconceptions, it should be understood that the term 'refuse' not only includes what traditionally is denoted as 'household refuse' or 'household garbage' but also includes all fractions within the field of waste disposal such as paper, clothes, laundry, packages and organic waste.

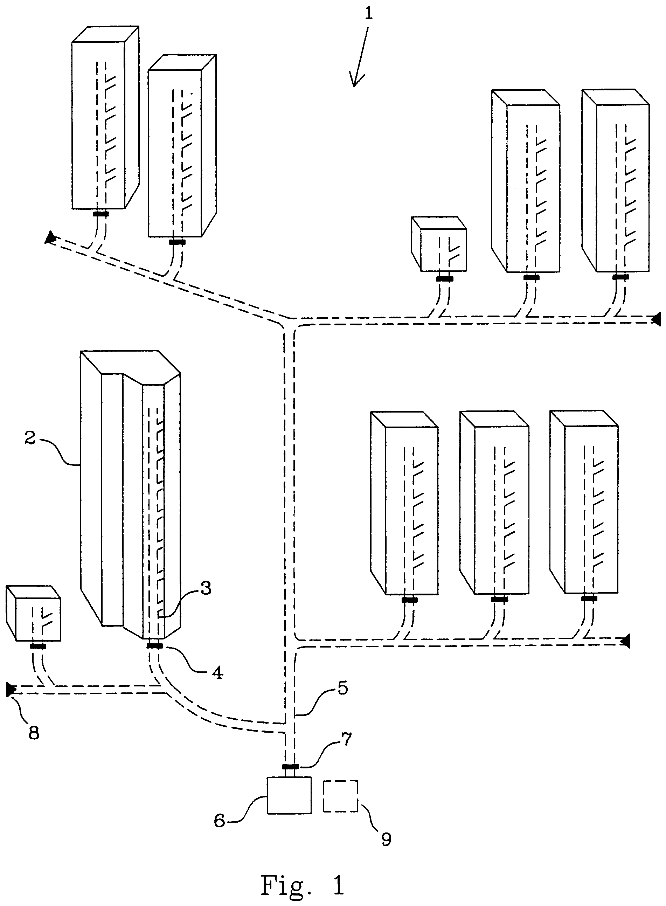

For a better understanding of the invention, a general overview of an illustrative vacuum refuse collection system will now be made with reference to Fig. 1.

### System overview

Fig. 1 is a schematic drawing illustrating an example of a vacuum refuse collection system. As an example, assume that the vacuum refuse collection system 1 is installed in a residential and/or business area having a number of buildings. Each building 2 is installed with a refuse chute 3, or equivalent. In this particular example, the refuse chutes are vertical chutes extending vertically through the buildings, and each chute normally has several insertion openings with corresponding access ports (not shown). Each refuse chute is equipped with an openable and closable discharge valve 4, preferably positioned in the basement of the building. When opened the discharge valve 4 establishes communication between the refuse chute 3 and an underground transport pipe 5 for discharging the refuse gathered upon the valve into the transport pipe. When closed the discharge valve 4 blocks the lower end of the refuse chute to provide a seal between the chute and the transport pipe 5.

The vacuum refuse collection system normally includes a number of transport pipes 5 which form an underground transport pipe system in which refuse is transported to a central refuse collection station 6 by means of suction of air. The transport pipe system is illustrated as having a main pipe to which a number of branches are connected. It should though be understood that the invention is not limited thereto, and that other configurations of the transport pipe system are feasible as well.

Each branch in the system has an air inlet valve 8 at the end of the branch. When the main valve 7 at the central refuse collection station 6 is opened, the transport pipe system or appropriate parts thereof is exposed to subatmospheric pressure or vacuum pressure, and when the air inlet valve 8 of a particular branch is opened the air needed for transporting the refuse gathered in the branch transport pipe 5 enters the system and transports the refuse to the central station 6. Sectioning valves (not shown) are normally used to seal different sections of the transport pipe system from each other to ensure sufficient pressure in individual sections for effective suction transport.

Furthermore, the vacuum refuse collection system comprises a control system 9 for controlled emptying of refuse in the system. More particularly, the control system controls the emptying of refuse from the refuse chutes to the transport pipe system and the suction transport of refuse from different branches of the transport pipe system to the central collection station by controlling the discharge valves, air inlet valves, sectioning valves and main valve of the system according to accepted control technology.

The invention is not concerned with the specific design of the discharge valves, air inlet valves, sectioning valves and main valves, which are all well known in the art and may be of any conventional type used in vacuum refuse collection systems. In the same manner, the central refuse collection station may be any conventional station known to the art. In general, however, once the refuse has been transported to the central station, the refuse is compacted at the central station and stored in containers.

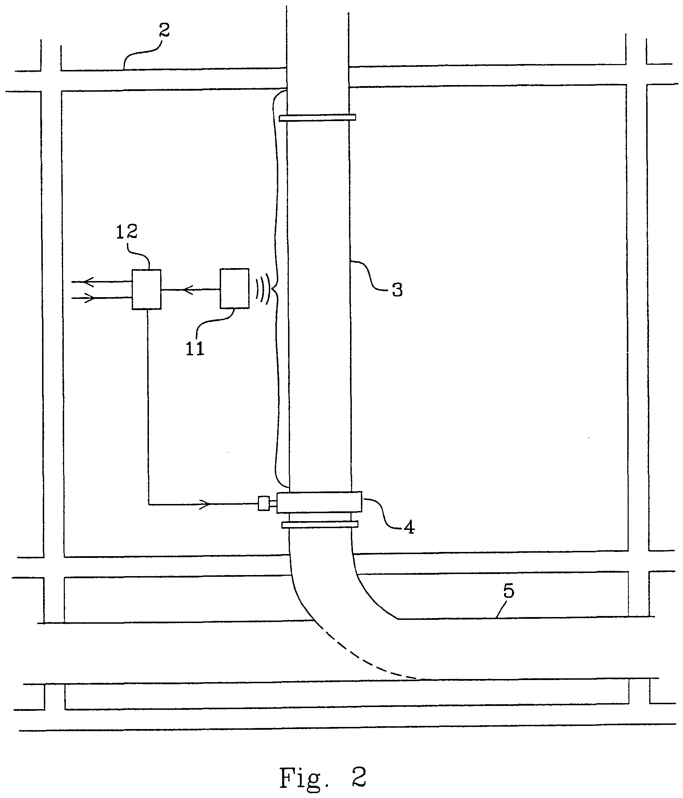

Fig. 2 illustrates an example of a refuse chute installed in a building. The refuse chute 3 is installed in a building 2 in a conventional manner and is equipped with an openable and closable discharge valve 4. The discharge valve 4 is preferably positioned in the basement of the building and is used for establishing communication between the refuse chute 3 and an underground transport pipe 5. Furthermore, the refuse chute 3 has a level indicator system, which in this particular example includes an analog level sensor 11 for measuring the level of refuse in the refuse chute 3. The analog level sensor 11, which may be in the form of an ultrasonic sensor or equivalent, is normally positioned in the chute wall or in the vicinity thereof, and generates signal information representative of the level of refuse in the chute 3. As an alternative to an analog level sensor, a number of discrete level sensors positioned along the height of the chute between the basement and the first floor can be used to give information on the level of refuse in the refuse chute 3. Examples of discrete level sensors include mechanical level sensors and optical level sensors. It is also possible to measure the weight of the refuse in the chute, and use this information as a measure of the level of refuse in the refuse chute.

It should be understood that normally there is a direct correspondence between the 'level' of refuse in a refuse chute and the volume of refuse in the chute. It is also important to understand that with regard to the measurement of the level of refuse, the term 'refuse chute' not only includes the standard refuse chutes normally used, but all types of refuse storage volumes, even expanded storage volumes which may be in the form of containers with larger cross-section than the refuse chutes themselves.

The signal information generated by the level sensor 11 is transferred directly or via a distributed control unit 12 to the control system, and the control system normally responds to signal information from level sensors in a number of refuse chutes in the refuse collection system for performing controlled emptying of refuse. The distributed control unit 12 may also be used to forward control signals from the control system to the discharge valve 4.

The idea according to the invention is to perform frequent consecutive measurements of the increasing level of refuse in at least one refuse chute, and adaptively predict a future value of at least one operational parameter of the vacuum refuse collection system based on all or an appropriate subset of the level measurements.

The level sensors 11 provided in the relevant refuse chutes give continuous information on the level of refuse in the chutes, and by reading the refuse level from the level sensors at a given sampling frequency, such as 0.1 or 1 Hz (corresponding to a sampling period of 10 seconds and 1 second, respectively), a good empirical base for predictions is established. In general, the empirical data is then processed by a computer or other equivalent processing means to determine one or more predicted values. Making relevant predictions of future values of operational parameters based on empirical data, instead of using simple and static rules of thumb, helps increasing the reliability and efficiency of the overall vacuum refuse collection system.

According to the invention the predicted value of the at least one operational parameter is a future point in time when the level of refuse in a refuse chute is expected to exceed a given threshold level, or an expected level of refuse in the refuse chute at a given future point in time. A basic example is the prediction of the optimal time for emptying of a refuse chute so that the refuse chute is emptied at the "exact" right moment, not too early and not too late (by reading the growth of material in the chute it is possible to make a decision of the right time for emptying). Normally, compared to conventional system control, this means that the total number of discharge valve openings per day in a system can be reduced at the same time as the number of overloadings is minimized.

For a better understanding, we will start by describing the prediction-based emptying procedure with reference to the simple case of an individual refuse chute, and later on the more complicated case of prediction-based emptying for groups of refuse chutes will be explained.

*Prediction-based emptying for an individual refuse chute*

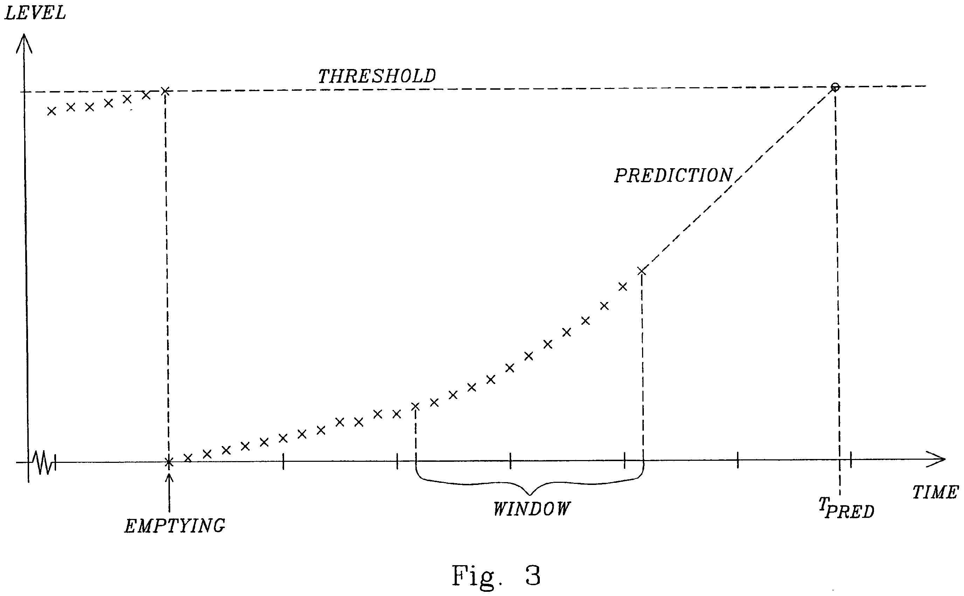

Fig. 3 is a schematic graph that illustrates an example of how the level of refuse in a refuse chute may vary with time, and indicates a prediction of a future point in time when the level of refuse is expected to exceed a given threshold level. The y-axis is representative of the level of refuse in a refuse chute as sensed by a level sensor provided in the chute, and the x-axis is representative of time. Preferably, the level sensor is read by the control system at regular intervals, for example once every 10 seconds. The discrete level measurements are indicated in the graph of Fig. 3 by crosses. The graph generally shows how the level of refuse increases with time, indicating an emptying of the refuse chute where the level of refuse goes down to zero and how the level of refuse subsequently continues to grow after the emptying.

According to the invention, the level measurements are used for making predictions, one of which is indicated by the dotted line in Fig. 3, of a future point in time, $T_{PRED}$, when the level of refuse is expected to exceed a predefined threshold level so that the refuse chute can be scheduled for emptying at the right moment. Normally, a new prediction is made each new sample, or at least at regular intervals, so that changes in the predicted value can be monitored continuously and hence the control can be adapted accordingly. This is generally referred to as adaptive prediction and control: At first, the predicted value may indicate a certain point in time when the threshold level is expected to be reached, whereas later predictions considering more recent measurements may indicate that the refuse level is expected to reach the threshold level at a different time. The predictions are expected to become better and better as the level of refuse approaches the threshold level, but it is important to obtain a good prediction as soon as possible in order to have enough time to take necessary control actions.

*Prediction techniques*

A basic and robust prediction technique includes computation of the rate of growth of refuse in the refuse chute based on a number of the level measurements, and extrapolating the growth curve using a measurement of the actual level and the estimated growth rate. The accumulated level of refuse, here expressed in terms of volume, at a certain point in time, t, can generally be defined in the following way:

$$V(t) = V(t_{init}) + \int_{t_{init}}^{t} (Q_i - Q_o)dt = \int_{t_{init}}^{t} (dV / dt)dt \qquad (1)$$

where $V(t)$ is the volume of refuse at time t, $V(t_{init})$ is the initial volume at time $t_{init}$, $Q_i$ is the inflow of refuse and $Q_o$ is the outflow of refuse. It is possible to make a prediction, or prognosis, of the time $T_{PRED}$ when a given threshold volume $V_{threshold}$ is reached by measuring at the actual time t, the volume $V(t)$ and estimating the development of derivative dV/dt. The rate of change of the volume is given by the difference between the inflow $Q_i$ and the outflow $Q_o$, and is represented by the slope of the curve in Fig. 3.

Using linear extrapolation, the point in time $T_{PRED}$ when the threshold volume $V_{threshold}$ is expected to be reached is given by:

$$T_{PRED} = t + \frac{V_{threshold} - V(t)}{dV / dt} \qquad (2)$$

When using a numerical solution to the above problem, the value of the derivative dV/dt to be used in equation (2) normally has to be determined with consideration to a given time period. The slope of the curve in Fig. 3 normally varies with time, and it has to be determined which part of the measurement curve, or the complete curve if appropriate, that should be considered. For this reason a common technique is to define a time window, either explicitly or implicitly.

A simple estimation of the derivative dV/dt is to take the difference between the most recent sample value of the volume and the first sample value of the volume within the time window, and divide this difference with the length of the time window. It should though be understood that this gives a quite rough estimate of the derivative.

A more elaborate approach involves estimating the derivative of V at each sampling time within the given time window and performing a weighted average calculation based on the estimated derivatives. At each sampling time $t_x$ the volume $V(t_x)$ is read from the level sensor, and the derivative of V, i.e. $dV(t_x)/dt$, is estimated. The derivative at each sampling time can be estimated, for example by taking the difference between the volume $V(t_x)$ at the actual sampling time $t_x$ and the volume $V(t_{x-1})$ at the previous sampling time $t_{x-1}$ and divide this difference by the sampling period T:

$$dV(t_x) / dt \approx \frac{V(t_x) - V(t_{x-1})}{T} \tag{3}$$

It is here assumed that the derivative is constant across the sampling period between $t_x$ and $t_{x-1}$. Next, the weighted average calculation is performed according to the following expression:

$$\overline{dV/dt} = \frac{w_x \cdot \frac{V(t_x) - V(t_{x-1})}{T} + w_{x-1} \cdot \frac{V(t_{x-1}) - V(t_{x-2})}{T} + \ldots + w_{x-(N-2)} \cdot \frac{V(t_{x-(N-2)}) - V(t_{x-(N-1)})}{T}}{N-1} \tag{4}$$

where w denotes the weight coefficients. It is thus possible to set the weight coefficients so as to give more relative weight to the most recent growth measurements and less weight to earlier growth measurements within the time window.

Normally, the time window from which measurements are used in the average calculation moves along with the new samples, and accordingly the averaging process is sometimes referred to as a moving average process. If N consecutive raw data samples of the volume are considered, (N-1) estimated derivatives will be used in the average calculation. Correspondingly, the time window will extend for a time period of (N-1)·T units of time, where T is the sampling period. The actual time window and the actual sampling period to be used is highly dependent on the specific application and has to be decided on a case-by-case basis. The length of the time window normally has to be adapted to the average cycle time of the refuse collection system. With an average cycle time of 5-10 minutes, an example of an appropriate time window may be in the range from 2 to 3 minutes.

An interesting averaging technique is the geometric moving average algorithm, which has the property of giving the most recent estimate the weight coefficient $\lambda$ and all the previous estimates weight coefficients that are decreasing in geometric progression. The initial weight $\lambda$ is often referred to as the so-called forgetting factor, which determines how fast the weights are decreasing and thus the number of estimates that are actually remembered by the algorithm. If, by way of example, we want a certain number, K, of the most recent estimates to stand for a certain percentage P of the total contribution to the geometric moving average, the following forgetting factor $\lambda$ should be used:

$$\lambda(P,K) = 1 - e^{\frac{\ln(100-P)}{K}} \tag{5}$$

Of course, there are a number of alternative ways of setting the weight coefficients, as well as alternative averaging techniques.

For more information on numerical methods for differentiation and integration, reference is made to the book Modeling and Simulation in Chemical Engineering by R.H.E Franks, Wiley - Interscience, 1972 pages 45-80.

*Handling fast flow variations*

In some situations, especially at the transition into a high load period or at the beginning of such a period when the growth rate may change rapidly, it may be advantageous to start with a preset value of the derivative and subsequently adjust this value based on the real-time level measurements. In this way, the risk of having the prediction-based control react to slowly to the rapid growth rate changes can be reduced or eliminated. The preset value may be determined for example based on experience or statistical measurements.

In a refuse collection system in operation, the derivative will generally vary a lot during the day, and the flow variations can be fast and random, leading to an unsteady derivative. By filtering the calculated derivative estimates we may coop with fast, random and transient flow variations, thus reducing the risk of having the control system overreact in response to such flow variations. Still, it is necessary to have a control system that is sensitive enough to respond to substantial changes in the input flow of refuse. Averaging as described above is one form of filtering which in most applications will give satisfactory results. It is also possible to use a digital filter such as a first order filter, corresponding to time average calculations, or a more advanced higher order filter.

A more thorough analysis of the refuse flow variations during the day may provide information for optimizing the filter or averaging performance for different load periods. By statistical measurements of the refuse levels during a number of days a number of different characteristic input flow periods during an ordinary day may be defined, considering the dynamics of the input flow. The model for prediction in general, and the estimation of the derivative function in particular, can then be flexibly adapted to the character of the input flow, for example by adjusting the filter characteristics and setting different values for the filter parameters depending on the period of the day. It is also possible to continue the collection of statistical information during the subsequent operation, and adapt the time periods and corresponding filter parameters as the statistics is updated.

Prediction based on growth rate determination is a basic and robust technique with many advantages. It should though be understood that the invention is not limited thereto, and that the prediction can be accomplished by any of a number of alternative techniques. For example, the prediction can be made by performing an extrapolation based on polynomial or other non-linear curve fitting. Another example involves prediction by means of adaptive filtering, where the time-dependent coefficients of an adaptive filter are controlled using a least mean square (LMS) method or equivalent.

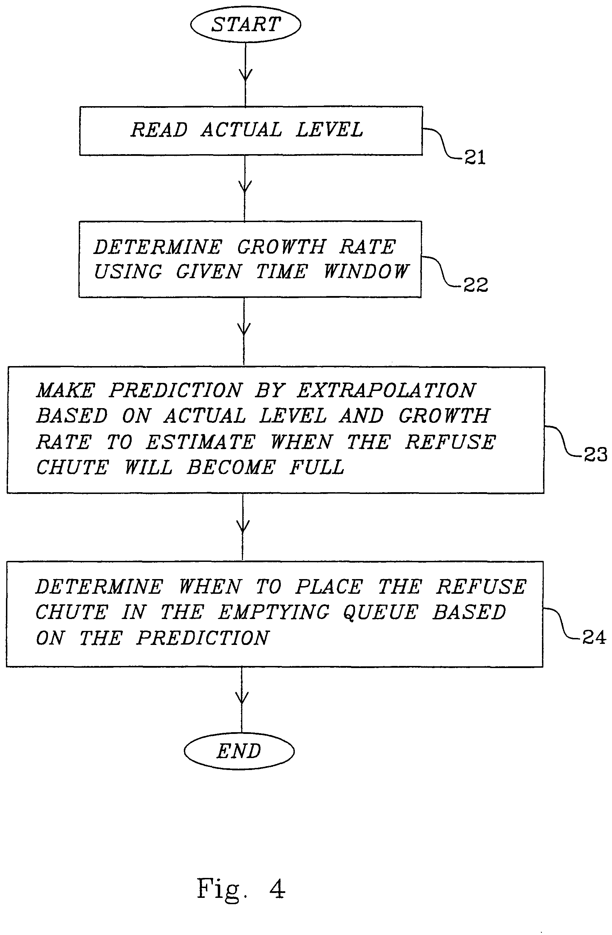

To summarize the main aspects discussed above, reference is now made to Fig. 4, which is a simple and schematic flow diagram of a prediction-based method of operating a vacuum refuse collection system according to a first preferred embodiment of the invention. The level of refuse in one or more refuse chutes is measured by a level sensor provided in the chute(s), and the level information is normally read by the control system at given sampling frequency. In step 21, the actual level of refuse is read by the control system at the current sampling occasion. Next, in step 22, the growth rate is determined using a given time window. In step 23, the determined growth rate and the level of refuse read in step 21 are used in an extrapolation procedure to make a prediction of the future point in time when the level of refuse is expected to exceed a given threshold level. The time prediction, normally adjusted somewhat using a safety margin, is subsequently utilized by the control system in step 24 to determine when to place the refuse chute in queue for emptying, considering emptying times and collection times of refuse from other refuse chutes in the emptying queue.

*Controlling the emptying procedure based on the predictions*

From a practical point of view, it is desirable to make sure that the refuse chutes are emptied with relatively well-filled storage volumes at the same time as overfillings are avoided. There are a number of ways of securing this, and in the following an illustrative example of how to use the predicted value in the control of the refuse collection system according to a preferred embodiment of the invention will be explained briefly.

In this particular example, two independent so-called emptying conditions are checked at regular decision points to determine whether to place the refuse chute in queue for emptying. Assuming that a decision is to be made at the time $t_x$, when the volume of refuse in the refuse chute is $V_x$, a first emptying condition for the refuse chute can be defined in the following way:

$$\text{IF } t_x > k_1 \cdot T_{PRED} \text{ THEN EMPTYING CONDITION 1 IS FULFILLED,}$$
$$\text{ELSE GOTO EMPTYING CONDITION 2.} \tag{5}$$

The first condition can be regarded as a safety solution that guarantees that the refuse chute is placed in the emptying queue a certain time before the predicted time is due. If this time is minimized by setting a high value for the constant $k_1$, a relatively high risk for overfilling is accepted, and conversely, by setting a low value for $k_1$ the safety margin will increase. For example, $k_1$ may be set to 0.9.

A second emptying condition may be utilized to determine whether the refuse chute is worth emptying, or in other words, if it is acceptable to empty the refuse chute considering the level of refuse and the growth rate of refuse.

$$\text{IF } (V_x/V_{max}) > k_2 \text{ AND } (T_{PRED}-t_x) < k_3 \cdot \text{MTBE THEN EMPTYING}$$
$$\text{CONDITION 2 IS FULFILLED,} \tag{6}$$

where a Mean Time Between Emptying, MTBE, is determined for the refuse chute as a weighted average value of previous emptying cycles, and the times are taken with reference to a common zero point, which is defined as the most recent emptying of the refuse chute. For example, $k_2$ may be set to 0.6. This means that if the volume $V_x$ has reached 60% of the maximum allowed volume $V_{max}$, the first part of the second emptying condition is fulfilled. The second part of the emptying condition is based on a comparison with the possible cycle time, MTBE, for the refuse chute. If the growth rate is slow in relation to the MTBE estimate, the refuse chute is not considered worth emptying and the second part of the emptying condition will not be fulfilled. On the other hand, if the growth rate is faster, the refuse chute may be considered as worth emptying. By manipulating the $k_3$ value, it is possible to set different time conditions for fulfilling the second emptying condition if the first part of the emptying condition is already fulfilled. For example, $k_3$ may be set to 1.5.

If later predictions indicate that the earlier predictions were inaccurate and that the refuse chute can be emptied at a later time, the refuse chute may be removed from the queue for the time being.

The use of safety margins in the calculations should be well organized for good control and so as to obtain results that are relatively unambiguous.

The above sequence of steps can be performed by a computer, by executing program elements such as functions, procedures or equivalents. These program elements may be written in a functional programming language, an object oriented programming language or any other suitable programming language. Preferably, an object-oriented language such as Java or C++ is used.

The refuse collection system is preferably controlled by a computer-implemented control system, which has functions for monitoring and controlling the refuse collection system.

*Control system overview*

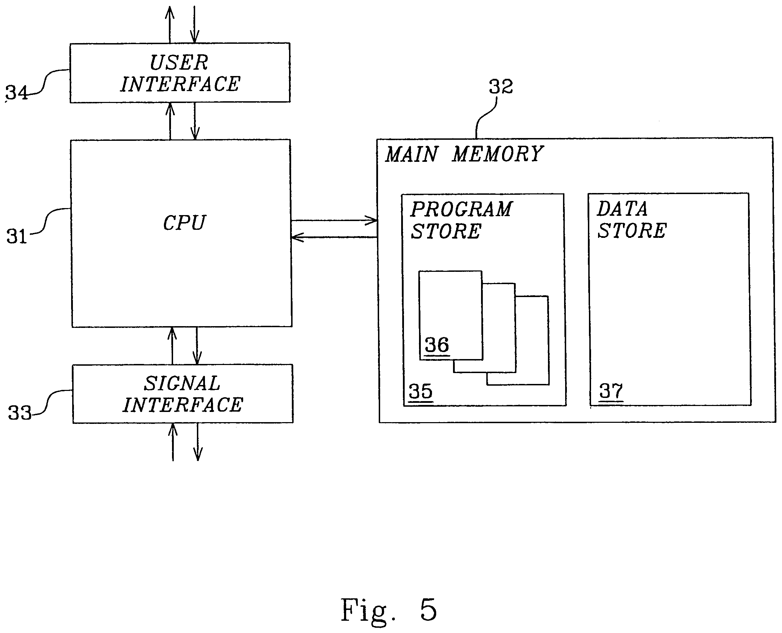

Fig. 5 is a schematic drawing of a computer-implemented control system according to a preferred embodiment of the invention. The control system basically comprises a computer or processor system in which one or more computer programs are being executed to perform the functions for monitoring and controlling the refuse collection system. The computer-based control system includes a CPU 31 or equivalent, a main memory 32, a conventional signal interface 33 and a conventional user interface 34. The main memory 32 has a program store 35 for computer programs 36 and a data store 37 for data. The control system is connected to the other components of the refuse collection system through conventional communication links and the control system utilizes the signal interface 33 for receiving signal information from the refuse collection system and for sending control signals to discharge valves, air inlet valves, sectioning valves and the main valve of the refuse collection system. In particular, the signal interface 33 is used for receiving level information from one or more level sensors in the refuse collection system. This level information is then processed by the computer program(s) 36 running on the computer system, and the prediction-based control, for example as described above with reference to Figs. 3 and 4, is thereby executed, resulting in appropriate control signals being sent to the relevant discharge valves, air inlet valves and main valve for effectuating controlled emptying and collection of refuse.

*Prediction-based emptying for groups of refuse chutes*

The prediction-based control has turned out to be particularly efficient for larger and more complex vacuum refuse collection systems where refuse chutes are partitioned into groups and emptied on group basis instead of on the level of individual refuse chutes. In general, discharge valves, and hence corresponding refuse chutes, are partitioned into groups and controlled emptying of refuse is performed by opening discharge valves on a group basis. By opening discharge valves on a group basis, refuse from a group of refuse chutes is gathered and transported collectively to the central station. In this way, the problem with frequent jumps between different branches is greatly reduced and the utilization of the available resources in the vacuum refuse collection system is substantially improved. In addition, the total inflow of refuse to a complete group as well as the total capacity of the group may be taken into account in the controlled emptying of refuse in the system.

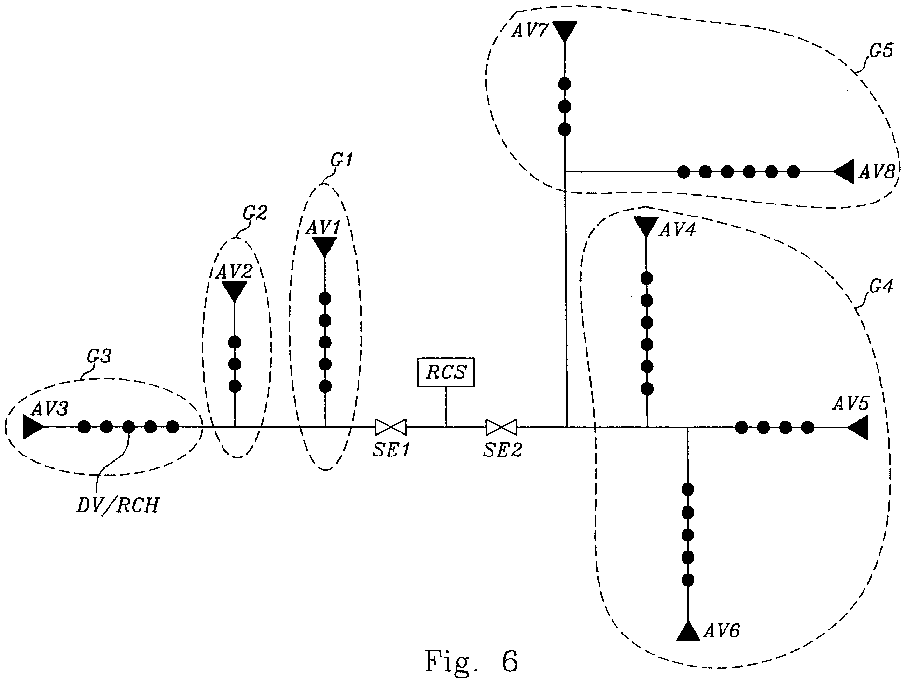

Reference will now be made to Fig. 6, which is a schematic logical view of an illustrative vacuum refuse collection system in which discharge valves have been partitioned into groups. The logical view of Fig. 6 includes representations of a central refuse collection station RCS, a transport pipe system in the form of a network of transport pipes, discharge valves/refuse chutes DV/RCH, sectioning valves SE1-SE2 and air inlet valves AV1-AV8.

As shown in Fig. 6, the discharge valves are partitioned into groups G1-G5. However, it should be understood that the partitioning shown in Fig. 6 is merely an example, and that other ways of partitioning discharge valves into groups are feasible as well. The groups are generally defined in dependence on the structure of the vacuum refuse collection system and the particular requirements that are being put on the system.

The groups are normally configured by the system administrator in a special group definition menu. In the group definition menu, the administrator defines which air inlet valves and which discharge valves that belong to which groups. An example of a group definition menu related to Fig. 6 is given in Table I below.

## Table I

| AV / DV | 1 | 2 | 3 | 4 | 5 | 6 | 7 | 8 |
|---|---|---|---|---|---|---|---|---|
| 1 | G1 | G2 | G3 | G4 | G4 | G4 | G5 | G5 |
| 2 | G1 | G2 | G3 | G4 | G4 | G4 | G5 | G5 |
| 3 | G1 | G2 | G3 | G4 | G4 | G4 | G5 | G5 |
| 4 | G1 |  | G3 | G4 | G4 | G4 |  | G5 |
| 5 | G1 |  | G3 | G4 |  | G4 |  | G5 |
| 6 |  |  |  | G4 |  |  |  | G5 |

In the example given in Table I above, it can be seen that the following groups have been defined:

- All DV's on AV1 belong to group G1.
- All DV's on AV2 belong to group G2.
- All DV's on AV3 belong to group G3.
- All DV's on AV4-6 belong to group G4.
- All DV's on AV7-8 belong to group G5.

According to a second preferred embodiment of the invention, the control system makes predictions based on signal information representative of the level of refuse from level sensors provided in a number of refuse chutes in the system, and selects the groups for emptying one at a time based on the predicted values. The selection mechanism normally requires the use of group emptying conditions, a predetermined emptying condition being given for each group. It is possible to combine emptying conditions used for individual refuse chutes, for example as given by expressions (5) and (6) above with emptying conditions for whole groups. By way of example, if the emptying conditions for a predetermined number of individual refuse chutes within a group are fulfilled, the group emptying condition may be considered as fulfilled.

Alternatively, as a variation, the emptying condition for each group can be based on the number of refuse chutes within the group that according to the predictions are expected to become full within the present or possibly the subsequent emptying cycle. In this case, it is normally sufficient if a single refuse chute is expected to become full for the group to be scheduled for emptying. It is however also possible to consider the overall storage capacity within a group, such as when one of a plurality of adjacent refuse chutes becomes full and the users can simply turn to another neighboring refuse chute. In that case, the emptying condition will normally include more than one refuse chute. The emptying conditions are normally configured by the system administrator.

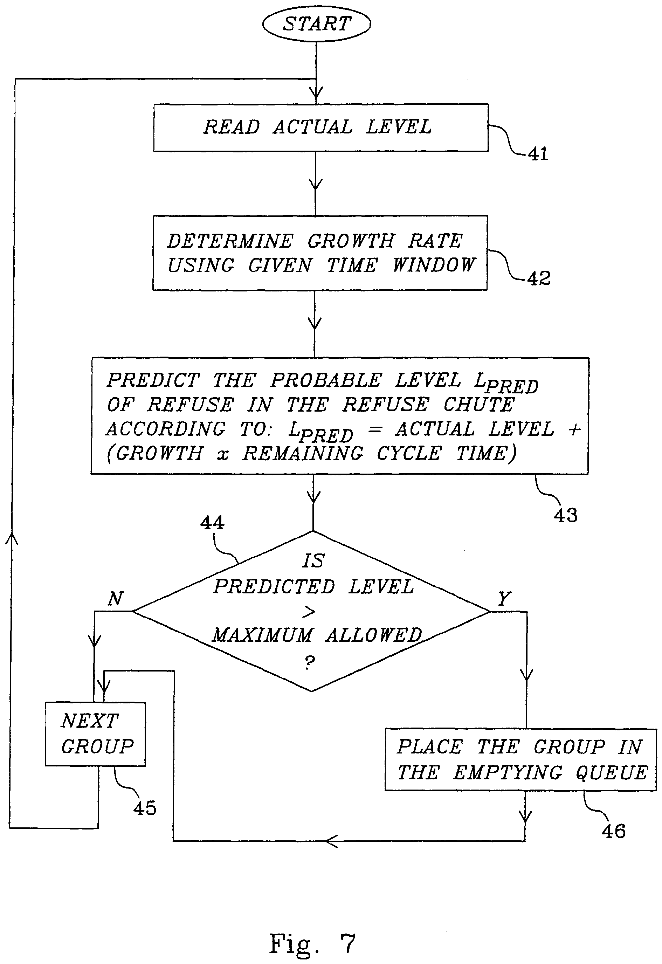

For a better understanding of this aspect of the invention, reference will now be made to the schematic flow diagram of Fig. 7, which is a schematic flow diagram of a prediction-based method of operating a refuse collection system according to a second preferred embodiment of the invention. The invention is of course not limited to the embodiment of Fig. 7, which merely represents an illustrative example of how to implement the ideas according to the invention.

The method is preferably implemented in software, which when running on a computer makes the computer perform the steps, functions and actions defined in the flow diagram of Fig. 7.

As mentioned before, the level of refuse in a number of refuse chutes is measured by respective level sensors provided in the chutes, and the generated level information is normally read by the control system at a given sampling frequency. The groups are checked one by one at regular decision intervals to determine whether or not to place the groups in queue for emptying.

For each refuse chute within a checked group, the actual level of refuse is read by the control system in step 41 at the present sampling occasion.

In step 42, the growth rate for each of the refuse chutes is determined based on a number of previous level measurements, for example as described with reference to Fig. 3.

In step 43, for each of the refuse chutes within the checked group, the determined growth rate and the actual level of refuse are used in an extrapolation procedure to make a prediction of the probable level of refuse at a given future point in time. Preferably, the given future point in time is the expected time for the next emptying of the refuse chute. The time interval between two consecutive emptyings is normally referred to as the emptying cycle time, and it may vary from refuse chute to refuse chute and also vary during the day. The expected time for the next emptying is normally estimated by averaging the cycle time during different load periods for all of or a number of the refuse chutes in the vacuum refuse collection system, taking a safety margin such as 5-10% of the average value into account.

In applications where the emptying cycle time differs significantly between different refuse chutes, an individual average cycle time may be determined for each refuse chute by continuously logging the cycle time for the relevant refuse chutes and calculating new average values for the individual cycle times each cycle.

In step 44, for each of the refuse chutes in the checked group, the predicted level expected at the next emptying is then compared to a maximum allowed threshold level and by considering the particular emptying condition given for the group being checked it is decided whether to place the group in queue for emptying.

If the number of refuse chutes predicted as full at the next emptying is lower than the number given by the emptying condition, the procedure continues with the next group, as indicated in step 45. In practice, this normally means that the remaining volume in the refuse chutes is sufficient to hold the accumulating refuse for yet another "cycle".

On the other hand, if the number of refuse chutes predicted as full at the next emptying is equal to or greater than the number given by the emptying condition, the group will be placed in the emptying queue, as indicated in step 46. The refuse chutes within a group placed in the emptying queue will be emptied as soon as the group arrives to the head of the queue. When it is time for the actual emptying, the control system sends the appropriate control signals to the main valve, the respective air inlet valve(s) and discharge valves to initiate opening and collection of refuse from the group.

It is a clear advantage to have the possibility to remove groups from the emptying queue if later predictions indicate that the group can actually wait another emptying cycle.

It has furthermore turned out to be advantageous to associate each group with a priority value that considers the importance of emptying refuse from the group. The priority value for each group may be determined by the system administrator based on for example storage capacity in the refuse chutes of the group, measured or presumed inflow of refuse to the group, sensitivity to overload or service availability. In order to ensure that all groups eventually will be emptied, the control system may increase the priority factor for each non-selected group that has a valid emptying condition as time goes by.

Preferably however the growth rate, together with a consideration of the consequences of overloading, is taken into account in setting the priority values. For example, if the predicted volume at the given future point in time for a refuse chute exceeds the maximum allowed volume by far, a relatively high priority value is given to the corresponding group, whereas if the predicted volume only exceeds the maximum volume by little a relatively low priority value is given to the group. In the latter case, a higher priority value may be given to the group if the consequences for overloading are severe.

When using emptying conditions, the group selection function follows the general principles given below. If the priority function is disabled, groups with valid emptying conditions are scheduled for emptying of refuse in a structured order. If the priority function is enabled, the group having the highest priority value among the groups with valid emptying conditions is selected for emptying and collection of refuse. If several groups have the same priority value, one of the groups is selected according to a predetermined group order.

Discharge valves within a selected group are preferably opened in a structured order one by one according to a predefined sequence. By this technique structured emptying (within the selected group) and emptying based on level prediction can be combined. It should though be understood that it is not necessary to open all discharge valves in a selected group.

It should also be understood that the control system may operate in different modes, and that a time schedule menu may be used by the administrator to configure when the different modes should be allowed according to presumed disposal patterns and volumes during a day. An example of such a time schedule menu is given below in Table II.

Table II

| Start | Stop | Mode | Priority | Day | Fraction |
|-------|-------|----------------|----------|----------|----------|
| 07.00 | 10.00 | High load mode | - | All days | All |
| 10.00 | 17.00 | Low load mode | Disabled | All days | P |
| 17.00 | 23.00 | High load mode | Enabled | All days | R |
| 23.00 | | Structured mode | - | All days | R |

In this particular example, three operation modes are used. Two of the operation modes, low load mode and high load mode, are related to load periods, whereas the third operation mode, called structured mode, involves a deterministic emptying of the refuse chutes according to a predetermined order without any load considerations. As can be seen, the system operates at low load mode and high load mode during different periods of the day. In the example outlined in Table II above, prediction-based control is advantageously applied during high-load mode, although nothing prevents the prediction technique to be used throughout the day. It should though be noted that it is normally advantageous to include a final structured collection of refuse at the end of each day. In structured mode, the control system goes through the groups one by one in a predetermined order. For example when shutting down the system at the end of a day, the group operation may be disabled and instead all chutes and transport pipes are emptied in a structured and predetermined order. In this example, a final structured collection of refuse from all refuse chutes and pipes in the system is performed at 23.00. After that the system is stopped and shut down during the night.

Naturally, the time scheduling may easily be changed for performance optimization or for adapting the system to changed refuse disposal patterns.

It is also possible for the administrator to associate the groups with different fractions such as household refuse and paper.

The vacuum refuse collection system according to the invention is capable of handling larger amounts of refuse per refuse chute as well as a larger number of refuse chutes connected to the system. This makes the system especially appropriate for use in areas with high-rise buildings and with many buildings connected to the same system or in larger airport refuse systems. It should be understood that although customized for complex high load applications, the system according to the invention can be used in all kinds of ARCS (automatic refuse collection system) applications.

The embodiments described above are merely given as examples, and it should be understood that the present invention is not limited thereto. Further modifications, changes and improvements which retain the basic underlying principles disclosed and claimed herein are within the scope of the invention as defined in the appended claims.

### Claims

1. A method of operating a vacuum refuse collection system (1), wherein said vacuum refuse collection system (1) comprises a refuse collection station (6), a transport pipe system (5) for transport of refuse to the collection station (6), a number of refuse chutes (3) connected to the transport pipe system (5) through respective discharge valves (4), communication between a refuse chute (3) and the transport pipe system (5) being established by opening the discharge valve (4) of the refuse chute (3), **characterized in that** said method comprises the steps of:

   performing, by a level indicator system (11), consecutive measurements of the level of refuse in at least one refuse chute (3) arranged in the vacuum refuse collection system (1);
   adaptively predicting, by a control system (9), a future value of at least one operational parameter of said vacuum refuse collection system (1) based on a number of said consecutive measurements, wherein said predicted value of said at least one operational parameter represents a future point in time when the level of refuse is expected to exceed a given threshold level or a probable level of refuse in the refuse chute (3) at a given future point in time; and
   controlling, by said control system (9), emptying of refuse in said vacuum refuse collection system (1) based on said predicted value of said at least one operational parameter.

2. The method according to claim 1,
   **characterized in that** the period between said consecutive measurements is smaller than 1 min, preferably smaller than 15 seconds, and that said predicting step includes computer-based processing of consecutive level measurements to adaptively predict said future value of said at least one operational parameter.

3. The method according to claim 1,
   **characterized in that** said method further comprises the steps of:

   defining a number of different characteristic input flow periods during a day based on statistical measurements of the refuse levels during a number of days; and
   adapting the model for predicting said future value in dependence on the input flow period.

4. The method according to claim 1,
   **characterized in that** said predicting step includes the steps of:

   determining a rate of growth of refuse in a refuse chute (3) based on a number of said consecutive measurements;
   performing an extrapolation based on a measurement of the actual level of refuse in the refuse chute (3) and the determined growth rate to estimate said predicted value; and
repeating the steps of determining a growth rate and performing an extrapolation as new measurements are performed so as to enable adaptive prediction.

5. The method according to claim 4,
**characterized in that** said step of determining a growth rate includes an average calculation of the growth rate using a time window for taking an appropriate subset of said refuse level measurements into account.

6. The method according to any of the preceding claims,
**characterized in that** said predicted value of said at least one operational parameter represents a future point in time when the level of refuse in a refuse chute (3) is expected to exceed a given threshold level, and said step of controlling emptying of refuse includes the step of comparing said predicted value with an estimate of the expected time for the next emptying of the refuse chute (3) to decide whether to place the refuse chute (3) in queue for emptying.

7. The method according to any of the claims 1-5,
**characterized in that** said predicted value of said at least one operational parameter represents the probable level of refuse in a refuse chute (3) at the expected time for the next emptying of the refuse chute (3), and said step of controlling emptying of refuse includes the step of comparing said predicted value with a given threshold level to decide whether to place the refuse chute (3) in queue for emptying.

8. The method according to claim 6 or 7,
**characterized in that** said expected time for the next emptying of a refuse chute (3) is estimated based on an average emptying cycle time for a number of refuse chutes (3) in the vacuum refuse collection system (1).

9. The method according to claim 1,
**characterized in that** said method further comprises the steps of:

partitioning discharge valves (4) into groups for the purpose of controlled emptying of refuse; and
selecting the groups one at a time for emptying of refuse, opening discharge valves (4) within a selected group, said selection being based on emptying conditions for the groups such that groups with valid emptying conditions are selectable for emptying of refuse; and
determining, for each group of discharge valves (4), whether the emptying condition for the group is valid or not based on said predicted value of said at least one operational parameter.

10. The method according to claim 9,
**characterized in that** said method further comprises the step of associating each group with a priority value, the group having the highest priority value among the groups with valid emptying conditions being selected for emptying of refuse.

11. The method according to claim 10,
**characterized in that** the priority value of a group is determined based on said predicted value of said at least one operational parameter and the consequences of not emptying the refuse chute(s) of the group.

12. A vacuum refuse collection system (1) comprising a refuse collection station (6), a transport pipe system (5) for transport of refuse to the collection station (6), a number of refuse chutes (3) connected to the transport pipe system (5) through respective discharge valves (4), communication between a refuse chute (3) and the transport pipe system (5) being established by opening the discharge valve (4) of the refuse chute (3),
**characterized in that** said system (1) further comprises:

means (11) for performing consecutive measurements of the level of refuse in at least one of said refuse chutes (3);
a control system (9) for performing adaptive prediction of a future value of at least one operational parameter of said vacuum refuse collection system (1) based on a number of said consecutive measurements, wherein said predicted value of said at least one operational parameter represents a future point in time when the level of refuse is expected to exceed a given threshold level or a probable level of refuse in the refuse chute (3) at a given future point in time; and
said control system (9) further configured for controlling emptying of refuse in said vacuum refuse collection system (1) based on said predicted value of said at least one operational parameter.

**13.** The vacuum refuse collection system (1) according to claim 12,
**characterized in that** the period between said consecutive measurements is smaller than 1 min, preferably smaller than 15 seconds, and that said control system (9) is a computer-based control system for processing of consecutive level measurements to adaptively predict said future value of said at least one operational parameter.

**14.** The vacuum refuse collection system (1) according to claim 12 or 13,
**characterized in that** said predicted value of said at least one operational parameter represents an estimate of when the level of refuse in a refuse chute (3) is expected to exceed a given level, and said control system (9) for controlling emptying of refuse includes means for determining when to place the refuse chute (3) in queue for emptying based on said estimate.

**15.** The vacuum refuse collection system (1) according to claim 12,
**characterized in that** said control system (9) includes:

means for determining a rate of growth of refuse in a refuse chute (3) based on a number of said consecutive measurements; and
means for performing an extrapolation based on a measurement of the actual level of refuse in the refuse chute (3) and the determined growth rate to estimate said predicted value.

**16.** The vacuum refuse collection system (1) according to any of the claims 12-15,
**characterized in that** said predicted value of said at least one operational parameter represents a future point in time when the level of refuse in a refuse chute (3) is expected to exceed a given threshold level, and said control system (9) for controlling emptying of refuse includes means for comparing said predicted value with an estimate of the expected time for the next emptying of the refuse chute (3) to decide whether to place the refuse chute (3) in queue for emptying.

**17.** The vacuum refuse collection system (1) according to any of the claims 12-15,
**characterized in that** said predicted value of said at least one operational parameter represents the probable level of refuse in a refuse chute (3) at the expected time for the next emptying of the refuse chute (3), and said means for effectuating controlled emptying of refuse includes means for comparing said predicted value with a given threshold level to decide whether to place the refuse chute (3) in queue for emptying.

**18.** The vacuum refuse collection system (1) according to claim 16 or 17,
**characterized in that** said system (1) further comprises means for estimating said expected time for the next emptying of a refuse chute (3) based on an average emptying cycle time for a number of refuse chutes (3) in the vacuum refuse collection system (1).

**19.** The vacuum refuse collection system (1) according to claim 12,
**characterized in that** said control system (9) for controlling emptying of refuse comprises:

means for defining groups of discharge valves (4) for the purpose of controlled emptying of refuse; and
means for selecting the groups one at a time for emptying of refuse, opening one or more discharge valves (4) within a selected group, said selection being based on emptying conditions for the groups such that groups with valid emptying conditions are selectable for emptying of refuse; and
means for determining, for each group of discharge valves (4), whether the emptying condition for the group is valid or not based on said predicted value of said at least one operational parameter.

**20.** The vacuum refuse collection system (1) according to claim 19,
**characterized in that** said control system (9) for controlling emptying of refuse further comprises means for associating each group with a priority value, the group having the highest priority value among the groups with valid emptying conditions being selected by said selecting means for emptying of refuse.

**21.** The vacuum refuse collection system (1) according to claim 20,
**characterized in that** the priority value of a group is determined based on said predicted value of said at least one operational parameter and the consequences of not emptying the refuse chute(s) (3) of the group.

**22.** A control system (9) for controlling the emptying of refuse from a number of refuse chutes (3) through respective discharge valves (4) into a transport pipe system (5) in a vacuum refuse collection system (1), wherein said vacuum refuse collection system (1) comprises a refuse collection station (6), communication between a refuse chute (3) and the transport pipe system (5) being established by opening the discharge valve (4) of the refuse chute (3), **characterized in that** said control system (9) comprises:

means for predicting a future value of at least one operational parameter of said vacuum refuse collection system (1) based on a number of consecutive measurements of the level of refuse in at least one of said refuse chutes (3), wherein said predicted value of said at least one operational parameter represents a future point in time when the level of refuse is expected to exceed a given threshold level or a probable level of refuse in the refuse chute (3) at a given future point in time; and
means for defining groups of discharge valves (4);
means for selecting the groups one at a time based on said predicted values; and
means for sending control signals to one or more of the discharge valves (4) within a selected group to initiate opening of these discharge valves (4), thus performing prediction-controlled emptying of refuse.

23. The control system (9) according to claim 22,
**characterized in that** said selecting means operates based on emptying conditions for the groups, and is operable for determining, for each group of discharge valves (4), whether the emptying condition for the group is valid or not based on a subset of said predicted values, groups with valid emptying conditions being selectable for emptying of refuse.

24. The control system (9) according to claim 23,
**characterized in that** said selecting means further comprises means for associating each group with a priority value, the group having the highest priority value among the groups with valid emptying conditions being selected for emptying of refuse.

25. The control system (9) according to claim 24,
**characterized in that** the priority value of a group is determined based on said subset of said predicted value of said at least one operational parameter and the consequences of not emptying the refuse chute(s) (3) of the group.

26. The control system (9) according to claim 22,
**characterized in that** the period between said consecutive measurements is smaller than 1 min, preferably smaller than 15 seconds, and that said control system (9) is a computer-based control system for processing of consecutive level measurements to enable adaptive prediction of said future values of said operational parameters.

27. The use of a computer program (36) for controlling, when running on a computer, operation of a vacuum refuse collection system (1), wherein said vacuum refuse collection system (1) comprises a refuse collection station (6), a transport pipe system (5) for transport of refuse to the collection station (6), a number of refuse chutes (3) connected to the transport pipe system (5) through respective discharge valves (4), communication between a refuse chute (3) and the transport pipe system (5) being established by opening the discharge valve (4) of the refuse chute, **characterized in that** said computer program (36) comprises:

program means for making the computer perform adaptive prediction of a future value of at least one operational parameter of said vacuum refuse collection system (1) based on consecutive measurements of the level of refuse in at least one refuse chute (3) arranged in the vacuum refuse collection system (1), wherein said predicted value of said at least one operational parameter represents a future point in time when the level of refuse is expected to exceed a given threshold level or a probable level of refuse in the refuse chute (3) at a given future point in time; and
program means for making the computer control emptying of refuse in said vacuum refuse collection system (1) based on said predicted value of said at least one operational parameter.

28. The use of the computer program (36) according to claim 27,
**characterized in that** said predicted value of said at least one operational parameter represents an estimate of when the level of refuse in a refuse chute (3) is expected to exceed a given level, and said control program means includes means for determining when to place the refuse chute (3) in queue for emptying based on said estimate.

29. The use of the computer program (36) according to claim 27 or 28,
**characterized in that** the period between said consecutive measurements is smaller than 1 min, preferably smaller than 15 seconds, and that said program means for making the computer perform adaptive prediction includes program means for making the computer adaptively determine a growth rate based said measurements and estimate said future value based on said adaptively determined growth rate.

30. The use of the computer program (36) according to claim 27,
**characterized in that** said computer program further comprises program means for making the computer adapt the model for predicting said future value to optimize the prediction for different characteristic input flow periods during a day.

31. The use of the computer program (36) according to any of the claims 27 to 30,
**characterized in that** said computer program is carried by a computer-readable medium.

## Patentansprüche

1. Verfahren zum Betreiben eines Systems (1) zum Sammeln von Müll mittels Vakuum, wobei das System (1) zum Sammeln von Müll mittels Vakuum eine Müllsammelstation (6), ein Transportrohrsystem (5) zum Transport des Mülls zur Sammelstation (6), eine Anzahl von Müllschächten (3), die durch jeweilige Auslassventile (4) mit dem Transportrohrsystem (5) verbunden sind, umfasst, wobei eine Verbindung zwischen einem Müllschacht (3) und dem Transportrohrsystem (5) durch Öffnen des Auslassventils (4) des Müllschachts (3) hergestellt wird, **dadurch gekennzeichnet, dass** das Verfahren die folgenden Schritte umfasst:

   Durchführen, durch ein Füllstandsanzeigesystem (11), von aufeinanderfolgenden Messungen des Müllpegels in mindestens einem in dem System (1) zum Sammeln von Müll mittels Vakuum angeordneten Müllschacht (3); adaptives Vorhersagen, durch ein Steuerungssystem (9), eines zukünftigen Wertes mindestens eines Betriebsparameters des Systems (1) zum Sammeln von Müll mittels Vakuum basierend auf einer Anzahl der aufeinanderfolgenden Messungen, wobei der vorhergesagte Wert des mindestens einen Betriebsparameters einen zukünftigen Zeitpunkt darstellt, an dem erwartet wird, dass der Müllpegel einen vorgegebenen Schwellenwert oder einen wahrscheinlichen Müllpegel in dem Müllschacht (3) zu einem gegebenen zukünftigen Zeitpunkt überschreitet; und
   Steuern, durch das Steuerungssystem (9), des Entleerens von Müll in dem System (1) zum Sammeln von Müll mittels Vakuum basierend auf dem vorhergesagten Wert des mindestens einen Betriebsparameters.

2. Verfahren nach Anspruch 1,
   **dadurch gekennzeichnet, dass** die Periode zwischen den aufeinanderfolgenden Messungen kleiner als 1 min, vorzugsweise kleiner als 15 Sekunden, ist und dass der Vorhersageschritt eine computergestützte Verarbeitung von aufeinanderfolgenden Pegelmessungen aufweist, um den zukünftigen Wert des mindestens einen Betriebsparameters adaptiv vorherzusagen.

3. Verfahren nach Anspruch 1,
   **dadurch gekennzeichnet, dass** das Verfahren ferner die folgenden Schritte umfasst:

   Definieren einer Anzahl von unterschiedlichen charakteristischen Eingangsflussperioden während eines Tages basierend auf statistischen Messungen der Müllpegel während einer Anzahl von Tagen; und
   Anpassen des Modells zur Vorhersage des zukünftigen Wertes in Abhängigkeit von der Eingangsflussperiode.

4. Verfahren nach Anspruch 1,
   **dadurch gekennzeichnet, dass** der Vorhersageschritt die folgenden Schritte aufweist:

   Bestimmen einer Wachstumsrate des Mülls in einem Müllschacht (3) basierend auf einer Anzahl der aufeinanderfolgenden Messungen;
   Durchführen einer Extrapolation basierend auf einer Messung des tatsächlichen Müllpegels in dem Müllschacht (3) und der bestimmten Wachstumsrate, um den vorhergesagten Wert abzuschätzen; und
   Wiederholen der Schritte des Bestimmens einer Wachstumsrate und Durchführen einer Extrapolation, wenn neue Messungen durchgeführt werden, um eine adaptive Vorhersage zu ermöglichen.

5. Verfahren nach Anspruch 4,
   **dadurch gekennzeichnet, dass** der Schritt des Bestimmens einer Wachstumsrate eine durchschnittliche Berechnung der Wachstumsrate unter Verwendung eines Zeitfensters aufweist, um eine geeignete Teilmenge der Müllpegelmessungen zu berücksichtigen.

**6.** Verfahren nach einem der vorhergehenden Ansprüche, **dadurch gekennzeichnet, dass** der vorhergesagte Wert des mindestens einen Betriebsparameters einen zukünftigen Zeitpunkt darstellt, zu dem erwartet wird, dass der Müllpegel in einem Müllschacht (3) einen vorgegebenen Schwellenwert überschreitet, und der Schritt des Steuerns der Müllentleerung den Schritt des Vergleichens des vorhergesagten Wertes mit einer Schätzung der voraussichtlichen Zeit für die nächste Entleerung des Müllschachts (3) aufweist, um zu entscheiden, ob der Müllschacht (3) in die Warteschlange zum Entleeren zu platzieren ist.

**7.** Verfahren nach einem der Ansprüche 1 bis 5, **dadurch gekennzeichnet, dass** der vorhergesagte Wert des mindestens einen Betriebsparameters den wahrscheinlichen Müllpegel in einem Müllschacht (3) zur voraussichtlichen Zeit für die nächste Entleerung der Müllschacht (3) darstellt, und der Schritt des Steuerns der Müllentleerung den Schritt des Vergleichens des vorhergesagten Wertes mit einem gegebenen Schwellwertpegel aufweist, um zu entscheiden, ob der Müllschacht (3) in der Warteschlange zum Entleeren zu platzieren ist.

**8.** Verfahren nach Anspruch 6 oder 7, **dadurch gekennzeichnet, dass** die erwartete Zeit für die nächste Entleerung eines Müllschachts (3) basierend auf einer durchschnittlichen Entleerungszykluszeit für eine Anzahl von Müllschächten (3) in dem System (1) zum Sammeln von Müll mittels Vakuum geschätzt wird.

**9.** Verfahren nach Anspruch 1, **dadurch gekennzeichnet, dass** das Verfahren ferner die folgenden Schritte umfasst:

Aufteilen von Auslassventilen (4) in Gruppen zum Zwecke der gesteuerten Müllentleerung; und
Auswählen der Gruppen eine nach der anderen zur Müllentleerung, Öffnen von Auslassventilen (4) innerhalb einer ausgewählten Gruppe, wobei die Auswahl auf Entleerungsbedingungen für die Gruppen basiert, so dass Gruppen mit gültigen Entleerungsbedingungen für die Müllentleerung wählbar sind; und
Bestimmen, für jede Gruppe von Auslassventilen (4), ob die Entleerungsbedingung für die Gruppe gültig ist oder nicht, basierend auf dem vorhergesagten Wert des mindestens einen Betriebsparameters.

**10.** Verfahren nach Anspruch 9, **dadurch gekennzeichnet, dass** das Verfahren ferner den Schritt des Zuordnens eines Prioritätswertes zu jeder Gruppe umfasst, wobei die Gruppe mit dem höchsten Prioritätswert unter den Gruppen mit gültigen Entleerungsbedingungen zum Entleeren des Mülls ausgewählt wird.

**11.** Verfahren nach Anspruch 10, **dadurch gekennzeichnet, dass** der Prioritätswert einer Gruppe basierend auf dem vorhergesagten Wert des mindestens einen Betriebsparameters und den Konsequenzen des Nichtentleerens des Müllschachts/der Müllschächte der Gruppe bestimmt wird.

**12.** System (1) zum Sammeln von Müll mittels Vakuum, umfassend eine Müllsammelstation (6), ein Transportrohrsystem (5) zum Transport des Mülls an die Sammelstation (6), eine Anzahl von Müllschächten (3), die durch jeweilige Auslassventile (4) mit dem Transportrohrsystem (5) verbunden sind, wobei eine Verbindung zwischen einem Müllschacht (3) und dem Transportrohrsystem (5) durch Öffnen des Auslassventils (4) des Müllschachts (3) hergestellt wird, **dadurch gekennzeichnet, dass** das System (1) ferner umfasst:

Mittel (11) zum Durchführen von aufeinanderfolgenden Messungen des Müllpegels in mindestens einem der Müllschächte (3);
ein Steuerungssystem (9) zum Durchführen einer adaptiven Vorhersage eines zukünftigen Wertes von mindestens einem Betriebsparameter des Systems (1) zum Sammeln von Müll mittels Vakuum basierend auf einer Anzahl der aufeinanderfolgenden Messungen, wobei der vorhergesagte Wert des mindestens einen Betriebsparameters einen zukünftigen Zeitpunkt darstellt, zu dem der Müllpegel voraussichtlich einen vorgegebenen Schwellenwert oder einen wahrscheinlichen Müllpegel in dem Müllschacht (3) zu einem gegebenen zukünftigen Zeitpunkt überschreitet; und
wobei das Steuerungssystem (9) ferner zum Steuern der Müllentleerung in dem System (1) zum Sammeln von Müll mittels Vakuum basierend auf dem vorhergesagten Wert des mindestens einen Betriebsparameters ausgebildet ist.

13. System (1) zum Sammeln von Müll mittels Vakuum nach Anspruch 12,
**dadurch gekennzeichnet, dass** die Periode zwischen den aufeinanderfolgenden Messungen kleiner als 1 min, vorzugsweise kleiner als 15 Sekunden, ist und dass das Steuerungssystem (9) ein computerbasiertes Steuerungssystem für die Verarbeitung von aufeinanderfolgenden Pegelmessungen ist, um den zukünftigen Wert des mindestens einen Betriebsparameters adaptiv vorherzusagen.

14. System (1) zum Sammeln von Müll mittels Vakuum nach Anspruch 12 oder 13, **dadurch gekennzeichnet, dass** der vorhergesagte Wert des mindestens einen Betriebsparameters eine Schätzung darstellt, wann erwartet wird, dass der Pegel des Mülls in einem Müllschacht (3) einen gegebenen Pegel überschreitet, und das Steuerungssystem (9) zum Steuern der Müllentleerung Mittel enthält, um zu bestimmen, wann der Müllschacht (3) in der Warteschlange zum Entleeren zu platzieren ist, basierend auf der Schätzung.

15. System (1) zum Sammeln von Müll mittels Vakuum nach Anspruch 12,
**dadurch gekennzeichnet, dass** das Steuerungssystem (9) aufweist:

Mittel zum Bestimmen einer Wachstumsrate des Mülls in einem Müllschacht (3) basierend auf einer Anzahl der aufeinanderfolgenden Messungen; und
Mittel zum Durchführen einer Extrapolation basierend auf einer Messung des tatsächlichen Müllpegels in dem Müllschacht (3) und der bestimmten Wachstumsrate, um den vorhergesagten Wert abzuschätzen.

16. System (1) zum Sammeln von Müll mittels Vakuum nach einem der Ansprüche 12 bis 15, **dadurch gekennzeichnet, dass** der vorhergesagte Wert des mindestens einen Betriebsparameters einen zukünftigen Zeitpunkt darstellt, zu dem erwartet wird, dass der Müllpegel in einem Müllschacht (3) einen vorgegebenen Schwellenwert überschreitet, und das Steuerungssystem (9) zum Steuern der Müllentleerung Mittel zum Vergleichen des vorhergesagten Wertes mit einer Schätzung der erwarteten Zeit für die nächste Entleerung des Müllschachts (3) aufweist, um zu entscheiden, ob der Müllschacht (3) in der Warteschlange zum Entleeren platziert werden soll.

17. System (1) zum Sammeln von Müll mittels Vakuum nach einem der Ansprüche 12 bis 15, **dadurch gekennzeichnet, dass** der vorhergesagte Wert des mindestens einen Betriebsparameters den wahrscheinlichen Müllpegel in einem Müllschacht (3) zu der erwarteten Zeit für die nächste Entleerung des Müllschachts (3) darstellt,
und das Mittel zum Bewirken einer gesteuerten Müllentleerung Mittel zum Vergleichen des vorhergesagten Wertes mit einem gegebenen Schwellwertpegel aufweist, um zu entscheiden, ob der Müllschacht (3) in der Warteschlange zum Entleeren zu platzieren ist.

18. System (1) zum Sammeln von Müll mittels Vakuum nach Anspruch 16 oder 17,
**dadurch gekennzeichnet, dass** das System (1) ferner Mittel aufweist, um die erwartete Zeit für die nächste Entleerung eines Müllschachts (3) basierend auf einer durchschnittlichen Entleerungszykluszeit für eine Anzahl von Müllschächten (3) in dem System (1) zum Sammeln von Müll mittels Vakuum abzuschätzen.

19. System (1) zum Sammeln von Müll mittels Vakuum nach Anspruch 12, **dadurch gekennzeichnet, dass** das Steuerungssystem (9) zum Steuern der Müllentleerung umfasst:

Mittel zum Definieren von Gruppen von Auslassventilen (4) zum Zwecke der gesteuerten Müllentleerung; und
Mittel zum Auswählen der Gruppen eine nach der anderen zur Müllentleerung, Öffnen eines oder mehrerer Auslassventile (4) innerhalb einer ausgewählten Gruppe, wobei die Auswahl auf Entleerungsbedingungen für die Gruppen basiert, so dass Gruppen mit gültigen Entleerungsbedingungen zur Müllentleerung ausgewählt werden können; und
Mittel zum Bestimmen, für jede Gruppe von Auslassventilen (4), ob die Entleerungsbedingung für die Gruppe gültig ist oder nicht, basierend auf dem vorhergesagten Wert des mindestens einen Betriebsparameters.

20. System (1) zum Sammeln von Müll mittels Vakuum nach Anspruch 19,
**dadurch gekennzeichnet, dass** das Steuerungssystem (9) zum Steuern der Müllentleerung ferner Mittel umfasst, um jeder Gruppe einen Prioritätswert zuzuordnen, wobei die Gruppe mit dem höchsten Prioritätswert unter den Gruppen mit gültigen Entleerungsbedingungen durch die Auswahleinrichtung zur Müllentleerung ausgewählt wird.

21. System (1) zum Sammeln von Müll mittels Vakuum nach Anspruch 20,

**dadurch gekennzeichnet, dass** der Prioritätswert einer Gruppe basierend auf dem vorhergesagten Wert des mindestens einen Betriebsparameters und der Konsequenzen des Nichtentleerens des Müllschachts/der Müllschächte (3) der Gruppe bestimmt wird.

22. Steuerungssystem (9) zum Steuern der Müllentleerung aus einer Anzahl von Müllschächten (3) durch jeweilige Auslassventile (4) in ein Transportrohrsystem (5) in einem System (1) zum Sammeln von Müll mittels Vakuum, wobei das System (1) zum Sammeln von Müll mittels Vakuum eine Müllsammelstation (6) umfasst, wobei eine Verbindung zwischen einem Müllschacht (3) und dem Transportrohrsystem (5) durch Öffnen des Auslassventils (4) des Müllschachtes (3) hergestellt wird,
   **dadurch gekennzeichnet, dass** das Steuerungssystem (9) umfasst:

   Mittel zur Vorhersage eines zukünftigen Wertes von mindestens einem Betriebsparameter des Systems (1) zum Sammeln von Müll mittels Vakuum basierend auf einer Anzahl von aufeinanderfolgenden Messungen des Müllpegels in mindestens einem der Müllschächte (3), wobei der vorhergesagte Wert des mindestens einen Betriebsparameters einen zukünftigen Zeitpunkt darstellt, zu dem erwartet wird, dass der Müllpegel einen vorgegebenen Schwellenwert oder einen wahrscheinlichen Müllpegel in dem Müllschacht (3) an einem gegebenen zukünftigen Zeitpunktüberschreitet; und
   Mittel zum Definieren von Gruppen von Auslassventilen (4);
   Mittel zum Auswählen der Gruppen, einer nach der anderen, basierend auf dem vorhergesagten Wert; und
   Mittel zum Senden von Steuerungssignalen an eines oder mehrere der Auslassventile (4) innerhalb einer ausgewählten Gruppe, um das Öffnen dieser Auslassventile (4) zu initiieren, wodurch eine vorhersagegesteuerte Müllentleerung durchgeführt wird.

23. Steuerungssystem (9) nach Anspruch 22,
   **dadurch gekennzeichnet, dass** das Auswahlmittel basierend auf Entleerungsbedingungen für die Gruppen arbeitet und betreibbar ist, für jede Gruppe von Auslassventilen (4) zu bestimmen, ob die Entleerungsbedingung für die Gruppe gültig ist oder nicht, basierend auf einer Teilmenge der vorhergesagten Werte, wobei Gruppen mit gültigen Entleerungsbedingungen zur Müllentleerung wählbar sind.

24. Steuerungssystem (9) nach Anspruch 23,
   **dadurch gekennzeichnet, dass** die Auswahleinrichtung ferner Mittel umfasst, um jeder Gruppe einen Prioritätswert zuzuordnen, wobei die Gruppe mit dem höchsten Prioritätswert unter den Gruppen mit gültigen Entleerungsbedingungen zur Müllentleerung ausgewählt wird.

25. Steuerungssystem (9) nach Anspruch 24,
   **dadurch gekennzeichnet, dass** der Prioritätswert einer Gruppe basierend auf der Teilmenge des vorhergesagten Wertes des mindestens einen Betriebsparameters und der Konsequenzen des Nichtentleerens des Müllschachts/der Müllschächte (3) der Gruppe bestimmt wird.

26. Steuerungssystem (9) nach Anspruch 22,
   **dadurch gekennzeichnet, dass** die Periode zwischen den aufeinanderfolgenden Messungen kleiner als 1 min, vorzugsweise kleiner als 15 Sekunden, ist und dass das Steuerungssystem (9) ein computerbasiertes Steuerungssystem zur Verarbeitung von aufeinanderfolgenden Pegelmessungen ist, um eine adaptive Vorhersage der zukünftigen Werte der Betriebsparameter zu ermöglichen.

27. Verwendung eines Computerprogramms (36) zum Steuern, wenn es auf einem Computer läuft, des Betriebs eines Systems (1) zum Sammeln von Müll mittels Vakuum, wobei das System (1) zum Sammeln von Müll mittels Vakuum eine Müllsammelstation (6), ein Transportrohrsystem (5) zum Transport des Mülls zur Sammelstation (6), eine Anzahl von Müllschächten (3), die durch jeweilige Auslassventile (4) mit dem Transportrohrsystem (5) verbunden sind, umfasst, wobei eine Verbindung zwischen einem Müllschacht (3) und dem Transportrohrsystem (5) durch Öffnen des Auslassventils (4) des Müllschachts hergestellt wird, **dadurch gekennzeichnet, dass** das Computerprogramm (36) umfasst:

   Programmmittel, um den Computer eine adaptive Vorhersage eines zukünftigen Wertes mindestens eines Betriebsparameters des Systems (1) zum Sammeln von Müll mittels Vakuum durchführen zu lassen, basierend auf aufeinanderfolgenden Messungen des Müllpegels in mindestens einem in dem System (1) zum Sammeln von Müll mittels Vakuum angeordneten Müllschacht (3), wobei der vorhergesagte Wert des mindestens einen Betriebsparameters einen zukünftigen Zeitpunkt darstellt, zu dem erwartet wird, dass der Müllpegel einen vorgegebenen Schwellenwert oder einen wahrscheinlichen Müllpegel in dem Müllschacht (3) zu einem gegebenen zukünftigen Zeitpunkt überschreitet; und Programmmittel, um den Computer die Steuerung der Müllentleerung in dem System (1) zum Sammeln von Müll mittels Vakuum basierend auf dem vorhergesagten Wertes des mindestens einen Betriebsparameters durchführen zu lassen.

28. Verwendung des Computerprogramms (36) nach Anspruch 27,
**dadurch gekennzeichnet, dass** der vorhergesagte Wert des mindestens einen Betriebsparameters eine Schätzung darstellt, wann erwartet wird, dass der Müllpegel in einem Müllschacht (3) einen vorgegebenen Wert überschreitet, und das Steuerprogrammmittel Mittel aufweist, um basierend auf der Schätzung zu bestimmen, wann der Müllschacht (3) in der Warteschlange zum Entleeren zu platzieren ist.

29. Verwendung des Computerprogramms (36) nach Anspruch 27 oder 28,
**dadurch gekennzeichnet, dass** die Periode zwischen den aufeinanderfolgenden Messungen kleiner als 1 min, vorzugsweise kleiner als 15 Sekunden, ist und dass das Programmmittel zum Veranlassen des Computers, die adaptive Vorhersage durchzuführen, Programmmittel aufweist, um den Computer zu veranlassen, adaptiv eine Wachstumsrate basierend auf den Messungen zu bestimmen und den zukünftigen Wert basierend auf der adaptiv bestimmten Wachstumsrate zu schätzen.

30. Verwendung des Computerprogramms (36) nach Anspruch 27,
**dadurch gekennzeichnet, dass** das Computerprogramm ferner Programmmittel umfasst, um den Computer zu veranlassen, das Modell zur Vorhersage des zukünftigen Wertes anzupassen, um die Vorhersage für unterschiedliche charakteristische Eingangsflussperioden während eines Tages zu optimieren.

31. Verwendung des Computerprogramms (36) nach einem der Ansprüche 27 bis 30,
**dadurch gekennzeichnet, dass** das Computerprogramm von einem computerlesbaren Medium getragen wird.

## Revendications

1. Procédé de fonctionnement d'un système de collecte d'ordures à vide (1), dans lequel ledit système de collecte d'ordures à vide (1) comprend une station de collecte d'ordures (6), un système de tuyau de transport (5) pour le transport des ordures vers la station de collecte (6), plusieurs glissières à ordures (3) raccordées au système de tuyau de transport (5) par le biais de soupapes de décharge respectives (4), la communication entre une glissière à ordures (3) et le système de tuyau de transport (5) étant établie par l'ouverture de la soupape de décharge (4) de la glissière à ordures (3), **caractérisé en ce que** ledit procédé comprend les étapes consistant à :

effectuer, par un système indicateur de niveau (11), des mesures consécutives du niveau d'ordures dans au moins une glissière à ordures (3) disposée dans le système de collecte d'ordures à vide (1) ;
prédire de façon adaptative, par un système de commande (9), une future valeur d'au moins un paramètre opérationnel dudit système de collecte d'ordures à vide (1) sur la base de plusieurs desdites mesures consécutives, dans lequel ladite valeur prédite dudit au moins un paramètre opérationnel représente un moment ultérieur dans le temps où il est prévu que le niveau d'ordures dépasse un niveau de seuil donné ou un niveau probable d'ordures dans la glissière à ordures (3) à un moment ultérieur donné dans le temps ; et
commander, par ledit système de commande (9), le vidage des ordures dans ledit système de collecte d'ordures à vide (1) sur la base de ladite valeur prédite dudit au moins un paramètre opérationnel.

2. Procédé selon la revendication 1,
**caractérisé en ce que** la période entre lesdites mesures consécutives est inférieure à 1 min, de préférence inférieure à 15 secondes, et **en ce que** ladite étape de prédiction comprend le traitement informatique de mesures de niveau consécutives pour prédire de façon adaptative ladite future valeur dudit au moins un paramètre opérationnel.

3. Procédé selon la revendication 1,
**caractérisé en ce que** ledit procédé comprend en outre les étapes consistant à :

définir plusieurs périodes différentes de flux d'entrée caractéristiques au cours d'une journée sur la base de mesures statistiques des niveaux d'ordures pendant plusieurs jours ; et
adapter le modèle pour prédire ladite future valeur selon la période de flux d'entrée.

**4.** Procédé selon la revendication 1,
**caractérisé en ce que** ladite étape de prédiction comprend les étapes consistant à :

déterminer une vitesse de croissance des ordures dans une glissière à ordures (3) sur la base de plusieurs desdites mesures consécutives ;
effectuer une extrapolation sur la base d'une mesure du niveau actuel d'ordures dans la glissière à ordures (3) et de la vitesse de croissance déterminée pour estimer ladite valeur prédite ; et
répéter les étapes consistant à déterminer une vitesse de croissance et à effectuer une extrapolation lorsque de nouvelles mesures sont effectuées de façon à permettre la prédiction adaptative.

**5.** Procédé selon la revendication 4, **caractérisé en ce que** ladite étape de détermination d'une vitesse de croissance comprend un calcul de moyenne de la vitesse de croissance en utilisant une fenêtre temporelle pour prendre en compte un sous-ensemble approprié desdites mesures de niveau d'ordures.

**6.** Procédé selon l'une quelconque des revendications précédentes,
**caractérisé en ce que** ladite valeur prédite dudit au moins un paramètre opérationnel représente un moment ultérieur dans le temps où il est prévu que le niveau d'ordures dans une glissière à ordures (3) dépasse un niveau de seuil donné, et ladite étape de commande de vidage des ordures comprend l'étape de comparaison de ladite valeur prédite à une estimation du moment prévu pour le vidage suivant de la glissière à ordures (3) pour décider si la glissière à ordures (3) doit être mise en file d'attente pour le vidage.

**7.** Procédé selon l'une quelconque des revendications 1 à 5,
**caractérisé en ce que** ladite valeur prédite dudit au moins un paramètre opérationnel représente le niveau probable d'ordures dans une glissière à ordures (3) au moment prévu pour le prochain vidage de la glissière à ordures (3), et ladite étape de commande de vidage des ordures comprend l'étape de comparaison de ladite valeur prédite à un niveau de seuil donné pour décider si la glissière à ordures (3) doit être mise en file d'attente pour le vidage.

**8.** Procédé selon la revendication 6 ou 7,
**caractérisé en ce que** ledit moment prévu pour le prochain vidage d'une glissière à ordures (3) est estimé sur la base d'un temps de cycle de vidage moyen pour plusieurs glissières à ordures (3) dans le système de collecte d'ordures à vide (1).

**9.** Procédé selon la revendication 1,
**caractérisé en ce que** ledit procédé comprend en outre les étapes consistant à :

diviser des soupapes de décharge (4) en groupes aux fins de vidage commandé des ordures ; et
sélectionner les groupes un à la fois pour le vidage des ordures, ouvrir les soupapes de décharge (4) dans un groupe sélectionné, ladite sélection étant basée sur des conditions de vidage pour les groupes de telle sorte que des groupes ayant des conditions de vidage valides peuvent être sélectionnés pour le vidage des ordures ; et
déterminer, pour chaque groupe de soupapes de décharge (4), si la condition de vidage pour le groupe est valide ou non sur la base de ladite valeur prédite dudit au moins un paramètre opérationnel.

**10.** Procédé selon la revendication 9,
**caractérisé en ce que** ledit procédé comprend en outre l'étape d'association de chaque groupe à une valeur de priorité, le groupe ayant la valeur de priorité la plus élevée parmi les groupes ayant des conditions de vidage valides étant choisi pour le vidage des ordures.

**11.** Procédé selon la revendication 10,
**caractérisé en ce que** la valeur de priorité d'un groupe est déterminée sur la base de ladite valeur prédite dudit au moins un paramètre opérationnel et des conséquences du non-vidage de la/des glissière(s) à ordures du groupe.

**12.** Système de collecte d'ordures à vide (1) comprenant une station de collecte d'ordures (6), un système de tuyau de transport (5) pour le transport des ordures vers la station de collecte (6), plusieurs glissières à ordures (3) raccordées au système de tuyau de transport (5) par le biais de soupapes de décharge respectives (4), la communication entre une glissière à ordures (3) et le système de tuyau de transport (5) étant établie par l'ouverture de la vanne de décharge (4) de la glissière à ordures (3), **caractérisé en ce que** ledit système (1) comprend en outre :

un moyen (11) pour effectuer des mesures consécutives du niveau d'ordures dans au moins une desdites glissières à ordures (3) ;

un système de commande (9) pour effectuer une prédiction adaptative d'une future valeur d'au moins un paramètre opérationnel dudit système de collecte d'ordures à vide (1) sur la base de plusieurs desdites mesures consécutives, dans lequel ladite valeur prédite dudit au moins un paramètre opérationnel représente un moment ultérieur dans le temps où il est prévu que le niveau d'ordures dépasse un niveau de seuil donné ou un niveau probable d'ordures dans la glissière à ordures (3) à un moment ultérieur donné dans le temps ; et

ledit système de commande (9) étant en outre configuré pour commander le vidage des ordures dans ledit système de collecte d'ordures à vide (1) sur la base de ladite valeur prédite dudit au moins un paramètre opérationnel.

13. Système de collecte d'ordures à vide (1) selon la revendication 12, **caractérisé en ce que** la période entre lesdites mesures consécutives est inférieure à 1 min, de préférence inférieure à 15 secondes, et **en ce que** ledit système de commande (9) est un système de commande informatique pour traiter des mesures de niveau consécutives afin de prédire de façon adaptative ladite future valeur dudit au moins un paramètre opérationnel.

14. Système de collecte d'ordures à vide (1) selon la revendication 12 ou 13, **caractérisé en ce que** ladite valeur prédite dudit au moins un paramètre opérationnel représente une estimation du moment où il est prévu que le niveau d'ordures dans une glissière à ordures (3) dépasse un niveau donné, et ledit système de commande (9) pour commander le vidage des ordures comprend un moyen pour déterminer à quel moment placer la glissière à ordures (3) en file d'attente pour le vidage sur la base de ladite estimation.

15. Système de collecte d'ordures à vide (1) selon la revendication 12, **caractérisé en ce que** ledit système de commande (9) comprend :

un moyen pour déterminer une vitesse de croissance des ordures dans une glissière à ordures (3) sur la base de plusieurs desdites mesures consécutives ; et

un moyen pour effectuer une extrapolation sur la base d'une mesure du niveau réel d'ordures dans la glissière à ordures (3) et de la vitesse de croissance déterminée pour estimer ladite valeur prédite.

16. Système de collecte d'ordures à vide (1) selon l'une quelconque des revendications 12 à 15, **caractérisé en ce que** ladite valeur prédite dudit au moins un paramètre opérationnel représente un moment ultérieur dans le temps où il est prévu que le niveau d'ordures dans une glissière à ordures (3) dépasse un niveau de seuil donné, et ledit système de commande (9) pour commander le vidage des ordures comprend un moyen pour comparer ladite valeur prédite à une estimation du moment prévu pour le prochain vidage de la glissière à ordures (3) pour décider si la glissière à ordures (3) doit être mise en file d'attente pour le vidage.

17. Système de collecte d'ordures à vide (1) selon l'une quelconque des revendications 12 à 15, **caractérisé en ce que** ladite valeur prédite dudit au moins un paramètre opérationnel représente le niveau probable d'ordures dans une glissière à ordures (3) au moment prévu pour le prochain vidage de la glissière à ordures (3), et ledit moyen pour effectuer un vidage commandé des ordures comprend un moyen pour comparer ladite valeur prédite à un niveau de seuil donné pour décider si la glissière à ordures (3) doit être mise en file d'attente pour le vidage.

18. Système de collecte d'ordures à vide (1) selon la revendication 16 ou 17, **caractérisé en ce que** ledit système (1) comprend en outre un moyen pour estimer ledit moment prévu pour le prochain vidage d'une glissière à ordures (3) sur la base d'un temps de cycle de vidage moyen pour plusieurs glissières à ordures (3) dans le système de collecte d'ordures à vide (1).

19. Système de collecte d'ordures à vide (1) selon la revendication 12, **caractérisé en ce que** ledit système de commande (9) pour commander le vidage des ordures comprend :

un moyen pour définir des groupes de soupapes de décharge (4) pour aux fins d'un vidage commandé des ordures ; et

un moyen pour sélectionner les groupes un à la fois pour le vidage des ordures, ouvrir une ou plusieurs soupapes de décharge (4) dans un groupe sélectionné, ladite sélection étant basée sur des conditions de vidage pour les groupes de sorte que des groupes ayant des conditions de vidage valides peuvent être sélectionnés pour le vidage des ordures ; et

un moyen pour déterminer, pour chaque groupe de soupapes de décharge (4), si la condition de vidage pour le groupe est valide ou non sur la base de ladite valeur prédite dudit au moins un paramètre opérationnel.

**20.** Système de collecte d'ordures à vide (1) selon la revendication 19, **caractérisé en ce que** ledit système de commande (9) pour commander le vidage des ordures comprend en outre un moyen pour associer chaque groupe à une valeur de priorité, le groupe ayant la valeur de priorité la plus élevée parmi les groupes ayant des conditions de vidage valides étant sélectionné par ledit moyen de sélection pour le vidage des ordures.

**21.** Système de collecte d'ordures à vide (1) selon la revendication 20, **caractérisé en ce que** la valeur de priorité d'un groupe est déterminée sur la base de ladite valeur prédite dudit au moins un paramètre opérationnel et des conséquences du non vidage de la/des glissière(s) d'ordures (3) du groupe.

**22.** Système de commande (9) pour commander le vidage d'ordures depuis plusieurs glissières à ordures (3) par des soupapes de décharge respectives (4) dans un système de tuyau de transport (5) dans un système de collecte d'ordures à vide (1), dans lequel ledit système de collecte d'ordures à vide (1) comprend une station de collecte d'ordures (6), la communication entre une glissière à ordures (3) et le système de tuyau de transport (5) étant établie par l'ouverture de la soupape de décharge (4) de la glissière d'ordures (3),
**caractérisé en ce que** ledit système de commande (9) comprend :

un moyen pour prédire une future valeur d'au moins un paramètre opérationnel dudit système de collecte d'ordures à vide (1) sur la base de plusieurs mesures consécutives du niveau d'ordures dans au moins une des dites glissières à ordures (3), dans lequel ladite valeur prédite dudit au moins un paramètre opérationnel représente un moment ultérieur dans le temps où il est prévu que le niveau d'ordures dépasse un niveau de seuil donné ou un niveau probable d'ordures dans la glissière d'ordures (3) à un moment ultérieur dans le temps ; et
un moyen pour définir des groupes de soupapes de décharge (4) ;
un moyen pour sélectionner les groupes un à la fois sur la base desdites valeurs prédites ; et
un moyen pour envoyer des signaux de commande à une ou plusieurs des soupapes de décharge (4) dans un groupe sélectionné pour initier l'ouverture de ces soupapes de décharge (4), effectuant ainsi le vidage commandé par prédiction des ordures.

**23.** Système de commande (9) selon la revendication 22, **caractérisé en ce que** ledit moyen de sélection fonctionne sur la base de conditions de vidage pour les groupes, et peut fonctionner pour déterminer, pour chaque groupe de soupapes de décharge (4), si la condition de vidage pour le groupe est valide ou non sur la base d'un sous-ensemble desdites valeurs prédites, des groupes ayant des conditions de vidage valides pouvant être sélectionnés pour le vidage des ordures.

**24.** Système de commande (9) selon la revendication 23, **caractérisé en ce que** ledit moyen de sélection comprend en outre un moyen pour associer chaque groupe à une valeur de priorité, le groupe ayant la valeur de priorité la plus élevée parmi les groupes ayant des conditions de vidage valides étant sélectionné pour le vidage des ordures.

**25.** Système de commande (9) selon la revendication 24, **caractérisé en ce que** la valeur de priorité d'un groupe est déterminée sur la base dudit sous-ensemble de ladite valeur prédite dudit au moins un paramètre opérationnel et des conséquences du non vidage de la/des glissière(s) d'ordures (3) du groupe.

**26.** Système de commande (9) selon la revendication 22, **caractérisé en ce que** la période entre lesdites mesures consécutives est inférieure à 1 min, de préférence inférieure à 15 secondes, et **en ce que** ledit système de commande (9) est un système de commande informatique pour traiter des mesures de niveau consécutives afin de permettre la prédiction adaptative desdites futures valeurs desdits paramètres opérationnels.

**27.** Utilisation d'un programme informatique (36) pour commander, lorsqu'il est exécuté sur un ordinateur, le fonctionnement d'un système de collecte d'ordures à vide (1), dans laquelle ledit système de collecte d'ordures à vide (1) comprend une station de collecte d'ordures (6), un système de tuyau de transport (5) pour le transport d'ordures vers la station de collecte (6), plusieurs glissières à ordures (3) raccordées au système de tuyau de transport (5) par des soupapes de décharge respectives (4), la communication entre une glissière à ordures (3) et le système de tuyau de transport (5) étant établie par l'ouverture de la soupape de décharge (4) de la glissière à ordures,
**caractérisé en ce que** ledit programme informatique (36) comprend :

un moyen de programme pour amener l'ordinateur à effectuer la prédiction adaptative d'une future valeur d'au moins un paramètre opérationnel dudit système de collecte d'ordures à vide (1) sur la base de mesures consécutives du niveau d'ordures dans au moins une glissière à ordures (3) disposée dans le système de collecte d'ordures à vide (1), dans lequel ladite valeur prédite dudit au moins un paramètre opérationnel représente un moment ultérieur dans le temps où il est prévu que le niveau d'ordures dépasse un niveau de seuil donné ou un niveau probable d'ordures dans la glissière à ordures (3) à un moment ultérieur donné dans le temps ; et un moyen de programme pour amener l'ordinateur à commander le vidage des ordures dans ledit système de collecte d'ordures à vide (1) sur la base de ladite valeur prédite dudit au moins un paramètre opérationnel.

28. Utilisation du programme informatique (36) selon la revendication 27, **caractérisée en ce que** ladite valeur prédite dudit au moins un paramètre opérationnel représente une estimation du moment où il est prévu que le niveau d'ordures dans une glissière à ordures (3) dépasse un niveau donné, et ledit moyen de programme de commande comprend un moyen pour déterminer à quel moment placer la glissière à ordures (3) en file d'attente pour le vidage sur la base de ladite estimation.

29. Utilisation du programme informatique (36) selon la revendication 27 ou 28, **caractérisée en ce que** la période entre lesdites mesures consécutives est inférieure à 1 min, de préférence inférieure à 15 secondes, et **en ce que** ledit moyen de programme pour amener l'ordinateur à effectuer une prédiction adaptative comprend un moyen de programme pour amener l'ordinateur à déterminer de façon adaptative une vitesse de croissance sur la base desdites mesures et à estimer ladite future valeur sur la base de ladite vitesse de croissance déterminée de façon adaptative.

30. Utilisation du programme informatique (36) selon la revendication 27, **caractérisée en ce que** ledit programme informatique comprend en outre un moyen de programme pour amener l'ordinateur à adapter le modèle pour prédire ladite future valeur afin d'optimiser la prédiction pour différentes périodes de flux d'entrée caractéristiques au cours d'une journée.

31. Utilisation du programme informatique (36) selon l'une quelconque des revendications 27 à 30, **caractérisée en ce que** ledit programme informatique est mis en oeuvre par un support lisible par ordinateur.

Fig. 1

Fig. 2

Fig. 3

```
                      ┌─────────┐
                      │  START  │
                      └─────────┘
                           │
                           ▼
          ┌──────────────────────────────┐
          │      READ  ACTUAL  LEVEL      │───21
          └──────────────────────────────┘
                           │
                           ▼
          ┌──────────────────────────────┐
          │   DETERMINE  GROWTH  RATE     │
          │   USING  GIVEN  TIME  WINDOW  │───22
          └──────────────────────────────┘
                           │
                           ▼
     ┌─────────────────────────────────────────┐
     │  MAKE  PREDICTION  BY  EXTRAPOLATION     │
     │  BASED  ON  ACTUAL  LEVEL  AND  GROWTH   │
     │  RATE  TO  ESTIMATE  WHEN  THE  REFUSE   │───23
     │  CHUTE  WILL  BECOME  FULL               │
     └─────────────────────────────────────────┘
                           │
                           ▼
     ┌─────────────────────────────────────────┐
     │  DETERMINE  WHEN  TO  PLACE  THE  REFUSE │
     │  CHUTE  IN  THE  EMPTYING  QUEUE  BASED  │───24
     │  ON  THE  PREDICTION                     │
     └─────────────────────────────────────────┘
                           │
                           ▼
                      ┌─────────┐
                      │   END   │
                      └─────────┘
```

Fig. 4

Fig. 5

Fig. 6

START

READ ACTUAL LEVEL ⏤41

DETERMINE GROWTH RATE
USING GIVEN TIME WINDOW ⏤42

PREDICT THE PROBABLE LEVEL $L_{PRED}$
OF REFUSE IN THE REFUSE CHUTE
ACCORDING TO: $L_{PRED}$ = ACTUAL LEVEL +
(GROWTH x REMAINING CYCLE TIME) ⏤43

44

IS
PREDICTED LEVEL
>
MAXIMUM ALLOWED
?

N

Y

NEXT
GROUP ⏤45

PLACE THE GROUP IN
THE EMPTYING QUEUE ⏤46

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9847788 A
- SE 9900401 A

- WO 9622238 A

**Non-patent literature cited in the description**

- **R.H.E FRANKS.** Modeling and Simulation in Chemical Engineering. Wiley - Interscience, 1972, 45-80